# EUROPEAN PATENT APPLICATION

(11) **EP 4 385 844 A1**
(43) Date of publication of application: **19.06.2024**
(21) Application number: 21955345.0
(22) Date of filing: 30.08.2021
(51) Int. Cl.: B60W 30/06, G08G 1/14

(54) **AUTOMATIC PARKING METHOD AND APPARATUS, AND VEHICLE**

(71) Applicant: Huawei Technologies Co., Ltd., Shenzhen, Guangdong 518129 (CN)
(72) Inventor: SU, Qing, Shenzhen, Guangdong 518129 (CN); YU, Hao, Shenzhen, Guangdong 518129 (CN)
(74) Representative: Isarpatent
(86) International application number: PCT/CN2021/115366
(87) International publication number: WO 2023/028764

(57) **Abstract**

This application provides an auto parking method and apparatus, and a vehicle. The method includes: A vehicle determines, based on positioning information of the vehicle and first map information, that the vehicle leaves a first road. The vehicle constructs a map based on a driving route obtained after the vehicle leaves the first road, to obtain second map information. The vehicle performs auto parking based on the second map information. In embodiments of this application, a user does not need to perform cumbersome operations in an auto parking process. This helps improve user experience in the auto parking process.

## Description

### TECHNICAL FIELD

This application relates to the field of intelligent driving, and more specifically, to an auto parking method and apparatus, and a vehicle.

### BACKGROUND

Auto parking (auto parking, AP) means that a vehicle automatically parks in a parking space, that is, an automated driving system can help a user to semi-automatically or automatically park the vehicle into the parking space. Auto parking may include auto parking assist (auto parking assist, APA), remote parking assist (remote parking assist, RPA), auto valet parking (auto valet parking, AVP), and the like.

Currently, some companies have launched an AVP technology for transforming a parking lot. A sensor network (for example, 25 lidars per 3 square meters on average), a wireless communication network, a parking lot management server, and the like need to be deployed in the parking lot. This brings excessive costs of transforming the parking lot. Consequently, it is difficult to popularize the AVP technology.

In addition, some vendors have launched a home zone parking pilot technology that needs a large quantity of user operations, for example, setting a starting point, manually driving to a parking space, and setting an end point by a user. When the user drives to the starting point next time, the vehicle enters a home zone parking pilot mode. For the user, the home zone parking pilot technology includes excessive user operations and causes excessive learning costs of the user, resulting in poor user experience.

Therefore, how to provide an auto parking technology that is convenient for the user becomes an urgent problem to be resolved.

### SUMMARY

This application provides an auto parking method and apparatus, and a vehicle. A user does not need to perform cumbersome operations in an auto parking process. This helps improve user experience in the auto parking process.

According to a first aspect, an auto parking method is provided. The method is applied to a vehicle. The method includes: The vehicle determines, based on positioning information of the vehicle and first map information, that the vehicle leaves a first road. The vehicle constructs a map based on a driving route obtained after the vehicle leaves the first road, to obtain second map information. The vehicle performs auto parking based on the second map information.

In this embodiment of this application, the vehicle can start to automatically construct map information after determining to travel out of the first road. This omits cumbersome operations of a user for constructing the map, helps improve intelligence of the vehicle, and also helps improve user experience in an auto parking process.

In some possible implementations, that the vehicle determines, based on the positioning information of the vehicle and the first map information, that the vehicle leaves the first road includes: The vehicle determines, based on the positioning information of the vehicle and the first map information, that the vehicle leaves the first road and the vehicle travels into a second road.

In some possible implementations, the first road may be an external road, and the second road may be an internal road.

In this embodiment of this application, the external road may be a road whose map information is locally stored in the vehicle, or a road whose map information obtained by the vehicle from a server includes information such as road-level information (or road-level information and lane-level information), a road name, and a traffic light. The internal road may be a road whose map information is not locally stored in the vehicle, or a road whose map information obtained by the vehicle from the server does not include the foregoing information. For example, the internal road may be a surface parking lot or an underground parking lot. For another example, the internal road may be a road in a unit or a cell.

In some possible implementations, the first map information may be map information locally stored in the vehicle or map information obtained by the vehicle from the server.

In some possible implementations, the vehicle constructs the second map information in a process of travelling along the driving route. After the vehicle constructs the second map information, if the vehicle determines that the vehicle does not park in a parking space, the vehicle may give the user a prompt of performing auto parking. When the vehicle receives an operation that the user indicates to perform auto parking, the vehicle may perform auto parking.

With reference to the first aspect, in some implementations of the first aspect, the second map information includes information about one or more parking spaces. Before the vehicle performs auto parking based on the second map information, the method further includes: The vehicle gives, in response to detecting that the vehicle leaves the first road again, the user a prompt of performing auto parking. That the vehicle performs auto parking based on the second map information includes: The vehicle parks, in response to a detected first operation that the user indicates to perform auto parking, the vehicle in a first parking space based on the second map information. The one or more parking spaces include the first parking space.

In this embodiment of this application, when the vehicle detects that the vehicle leaves the first road again, the vehicle may give the user a prompt of performing auto parking. When the vehicle detects the operation that the user indicates to perform auto parking, the vehicle may perform auto parking based on the second map information. This also helps improve user experience in the auto parking process.

With reference to the first aspect, in some implementations of the first aspect, the method further includes: The vehicle gives the user a prompt of the second map information in response to detecting that the vehicle leaves the first road again.

In this embodiment of this application, when the vehicle detects that the vehicle leaves the first road again, the vehicle may give the user a prompt of the second map information, and the user may perform an auto parking operation after receiving the second map information. This helps improve user experience in the auto parking process.

In some possible implementations, the vehicle may display the second map information on a human machine interface (human machine interface, HMI).

With reference to the first aspect, in some implementations of the first aspect, the first parking space is a parking space in which the vehicle parks when the vehicle travels along the driving route. That the vehicle gives the user a prompt of the second map information includes: The vehicle gives the user a prompt of the second map information and information about the first parking space.

In this embodiment of this application, after the vehicle travels along the driving route and parks in the first parking space, the vehicle may label the information about the parking space. Therefore, when the vehicle leaves the first road again, the vehicle can give the user a prompt of the second map information and the information about the first parking space in which the vehicle parks last time, so as to help the user quickly find a location at which the vehicle parks last time. This helps improve user experience of the user during auto parking.

With reference to the first aspect, in some implementations of the first aspect, that the vehicle parks, in response to the detected first operation that the user indicates to perform auto parking, the vehicle in the first parking space based on the second map information includes: The vehicle parks, in response to a detected second operation of selecting the first parking space from the one or more parking spaces by the user and the detected first operation, the vehicle in the first parking space based on the second map information.

In this embodiment of this application, when traveling along the driving route, the vehicle may store information about the plurality of parking spaces in the second map information. Therefore, when the vehicle leaves the first road again, the vehicle can give the user a prompt of the second map information and the information about the plurality of parking spaces, so as to help the user find a parking space in which the vehicle wants to park. This helps improve user experience of the user during auto parking.

With reference to the first aspect, in some implementations of the first aspect, that the vehicle gives, in response to detecting that the vehicle leaves the first road again, the user a prompt of performing auto parking includes: The vehicle gives, in response to detecting that the vehicle leaves the first road again and the vehicle recognizes a first identifier, the user a prompt of performing auto valet parking AVP. The first identifier is an identifier recognized when the vehicle travels along the driving route. That the vehicle parks, in response to the detected first operation that the user indicates to perform auto parking, the vehicle in the first parking space based on the second map information includes: The vehicle parks, in response to a detected operation that the user indicates to perform AVP, the vehicle in the first parking space based on the second map information.

In this embodiment of this application, when the vehicle leaves the first road again and identifies information about the first identifier, the vehicle may give the user a prompt of performing AVP. Therefore, when detecting the first operation of the user, the vehicle can park the vehicle in the first parking space through AVP. This helps improve user experience of the user during AVP.

In some possible implementations, if the second map information is map information of an internal parking lot, the identifier may be a barrier bar, a fence, or the like of the parking lot.

In some possible implementations, that the vehicle gives, in response to detecting that the vehicle leaves the first road again, the user a prompt of performing auto parking includes: The vehicle gives, in response to detecting that the vehicle leaves the first road again and the vehicle determines that a distance between a current location of the vehicle and a start point of the driving route is less than or equal to a preset distance, the user a prompt of performing auto valet parking AVP. That the vehicle parks, in response to the detected first operation that the user indicates to perform auto parking, the vehicle in the first parking space based on the second map information includes: The vehicle parks, in response to a detected operation that the user indicates to perform AVP, the vehicle in the first parking space based on the second map information.

In this embodiment of this application, when the vehicle travels to a place near a start point of a previous driving route, the vehicle may give the user a prompt of performing AVP. Therefore, when detecting the first operation of the user, the vehicle can park the vehicle in the first parking space through AVP. This helps improve user experience of the user during AVP.

With reference to the first aspect, in some implementations of the first aspect, that the vehicle gives, in response to detecting that the vehicle leaves the first road again, the user a prompt of performing auto parking includes: The vehicle gives, in response to detecting that the vehicle leaves the first road again and a distance between the vehicle and the first parking space is less than or equal to a preset distance, the user a prompt of performing auto parking assist APA. That the vehicle parks, in response to the detected first operation that the user indicates to perform auto parking, the vehicle in the first parking space based on the second map information includes: The vehicle parks, in response to a detected operation that the user indicates to perform APA, the vehicle in the first parking space based on the second map information.

In this embodiment of this application, when the vehicle detects that the vehicle leaves the first road and the distance between the vehicle and the first parking space is less than or equal to the preset distance, the vehicle can give the user a prompt of performing APA. Therefore, when detecting the first operation of the user, the vehicle can park the vehicle in the first parking space through APA. This helps improve user experience of the user during APA.

In some possible implementations, the distance between the vehicle and the first parking space may be a distance between the vehicle and a point in the parking space. For example, if the first parking space is a rectangle, the distance between the vehicle and the first parking space may be a distance between the vehicle and a center of the first parking space.

With reference to the first aspect, in some implementations of the first aspect, that the vehicle gives, in response to detecting that the vehicle leaves the first road again, the user a prompt of performing auto parking includes: The vehicle gives, in response to detecting that the vehicle leaves the first road again, the user a prompt of selecting a path from a plurality of paths to perform auto parking. Each path in the plurality of paths is a path from a current location of the vehicle to the first parking space. That the vehicle parks, in response to the detected first operation that the user indicates to perform auto parking, the vehicle in the first parking space based on the second map information includes: The vehicle parks, in response to a detected third operation of selecting a first path from the plurality of paths by the user and the detected first operation, the vehicle in the first parking space based on the second map information and the first path.

In this embodiment of this application, when determining, based on the second map information, that the plurality of paths lead into the first parking space, the vehicle may display, to the user, the plurality of paths planned by the vehicle based on the second map information, to help the user select a proper path from the plurality of paths and enable the vehicle to park in the first parking space. This helps improve user experience of the user during auto parking.

With reference to the first aspect, in some implementations of the first aspect, the first operation includes a gear shift operation.

In some possible implementations, the first operation may further include a voice instruction of the user.

With reference to the first aspect, in some implementations of the first aspect, before the vehicle constructs a map based on a driving route obtained after the vehicle leaves the first road, to obtain second map information, the method further includes: The vehicle determines that a frequency at which the vehicle leaves the first road within preset duration is greater than or equal to a first frequency threshold.

In this embodiment of this application, the vehicle may start to construct the second map information when determining that a quantity of times that the vehicle leaves the first road within the preset duration is greater than or equal to the first frequency threshold, so as to avoid overheads caused when the vehicle constructs a map of an area into which the vehicle does not frequently travel. This helps reduce energy consumption of the vehicle.

With reference to the first aspect, in some implementations of the first aspect, the vehicle stores information about a first area. Before the vehicle constructs a map based on a driving route obtained after the vehicle leaves the first road, to obtain second map information, the method further includes: The vehicle determines that the vehicle is located in the first area.

In this embodiment of this application, the vehicle may construct the second map information on a premise of determining that the vehicle is located in the first area, to avoid overheads caused by constructing the map information after the vehicle travels into an area where the vehicle rarely travels. This helps reduce energy consumption of the vehicle.

With reference to the first aspect, in some implementations of the first aspect, before the vehicle constructs a map based on a driving route obtained after the vehicle leaves the first road, to obtain second map information, the method further includes: The vehicle requests, from a server, map information obtained after the vehicle leaves the first road. The vehicle receives indication information sent by the server. The indication information indicates that the server does not store the map information obtained after the vehicle leaves the first road.

In this embodiment of this application, before constructing the second map information, the vehicle may determine that the server does not store the map information obtained after the vehicle leaves the first road, to avoid overheads caused when the vehicle constructs a map of an area whose map information is stored in the server. This helps reduce energy consumption of the vehicle.

According to a second aspect, an auto parking apparatus is provided. The apparatus includes: a determining unit, configured to determine, based on positioning information of the apparatus and first map information, that the apparatus leaves a first road; a composition unit, configured to construct a map based on a driving route obtained after the apparatus leaves the first road, to obtain second map information; and a parking unit, configured to perform auto parking based on the second map information.

With reference to the second aspect, in some implementations of the second aspect, the second map information includes information about one or more parking spaces. The apparatus further includes: a prompting unit, configured to: before auto parking is performed based on the second map information, give, in response to detecting that the apparatus leaves the first road again, a user a prompt of performing auto parking. The parking unit is specifically configured to park, in response to a detected first operation that the user indicates to perform auto parking, the apparatus in a first parking space based on the second map information. The one or more parking spaces include the first parking space.

With reference to the second aspect, in some implementations of the second aspect, the prompting unit is further configured to give the user a prompt of the second map information in response to detecting that the apparatus leaves the first road again.

With reference to the second aspect, in some implementations of the second aspect, the first parking space is a parking space in which the apparatus parks when the apparatus travels along the driving route. The prompting unit is specifically configured to give the user a prompt of the second map information and information about the first parking space.

With reference to the second aspect, in some implementations of the second aspect, the parking unit is specifically configured to park, in response to a detected second operation of selecting the first parking space from the one or more parking spaces by the user and the detected first operation, the apparatus in the first parking space based on the second map information.

With reference to the second aspect, in some implementations of the second aspect, the prompting unit is specifically configured to give, in response to detecting that the apparatus leaves the first road again and the apparatus recognizes a first identifier, the user a prompt of performing auto valet parking AVP. The first identifier is an identifier recognized when the apparatus travels along the driving route. The parking unit is specifically configured to give, in response to detecting an operation that the user indicates to perform AVP, the apparatus in the first parking space based on the second map information.

With reference to the second aspect, in some implementations of the second aspect, the prompting unit is specifically configured to give, in response to detecting that the apparatus leaves the first road again and a distance between the apparatus and the first parking space is less than or equal to a preset distance, the user a prompt of performing auto parking assist APA. The parking unit is specifically configured to park, in response to a detected operation that the user indicates to perform APA, the apparatus in the first parking space based on the second map information.

With reference to the second aspect, in some implementations of the second aspect, the prompting unit is specifically configured to give, in response to detecting that the apparatus leaves the first road again, the user a prompt of selecting a path from a plurality of paths to perform auto parking. Each path in the plurality of paths is a path from a current location of the apparatus to the first parking space. The parking unit is specifically configured to park, in response to a detected third operation of selecting a first path from the plurality of paths by the user and the detected first operation, the apparatus in the first parking space based on the second map information and the first path.

With reference to the second aspect, in some implementations of the second aspect, the first operation includes a gear shift operation.

With reference to the second aspect, in some implementations of the second aspect, the determining unit is further configured to: before the map is constructed based on the driving route obtained after the apparatus leaves the first road, to obtain the second map information, determine that a frequency at which the apparatus leaves the first road within preset duration is greater than or equal to a first frequency threshold.

With reference to the second aspect, in some implementations of the second aspect, the apparatus stores information about a first area. The determining unit is further configured to: before the map is constructed based on the driving route obtained after the apparatus leaves the first road, to obtain the second map information, determine that the apparatus is located in the first area.

With reference to the second aspect, in some implementations of the second aspect, the apparatus further includes: a sending unit, configured to: before the map is constructed based on the driving route obtained after the apparatus leaves the first road, to obtain the second map information, request, from a server, map information obtained after the apparatus leaves the first road; and a receiving unit, configured to receive indication information sent by the server. The indication information indicates that the server does not store the map information obtained after the apparatus leaves the first road.

According to a third aspect, an auto parking apparatus is provided. The apparatus includes a sensor and a computing platform. The sensor is configured to obtain positioning information of a vehicle and sends the positioning information to the computing platform. The computing platform is configured to determine, based on first map information and the positioning information, that the vehicle leaves a first road. The computing platform is further configured to construct a map based on a driving route obtained after the vehicle leaves the first road, to obtain second map information; and perform auto parking based on the second map information.

According to a fourth aspect, an auto parking apparatus is provided. The apparatus includes a processing unit and a storage unit. The storage unit is configured to store instructions, and the processing unit executes the instructions stored in the storage unit, so that the apparatus performs any possible method in the first aspect.

According to a fifth aspect, a vehicle is provided. The vehicle includes the apparatus according to the second aspect, the third aspect, or the fourth aspect.

According to a sixth aspect, a computer program product is provided. The computer program product includes computer program code. When the computer program code is run on a computer, the computer is enabled to perform the method according to the first aspect.

It should be noted that the computer program code can be totally or partially stored in a first storage medium. The first storage medium may be encapsulated with a processor, or encapsulated separately from a processor. This is not specifically limited in this embodiment of this application.

According to a seventh aspect, a computer-readable medium is provided. The computer-readable medium stores program code. When the computer program code is run on a computer, the computer is enabled to perform the method according to the first aspect.

According to an eighth aspect, an embodiment of this application provides a chip system. The chip system includes a processor, configured to invoke a computer program or computer instructions stored in a memory, to enable the processor to perform the method according to any one of the first aspect and the possible designs of the first aspect.

With reference to the eighth aspect, in a possible implementation, the processor is coupled to the memory through an interface.

With reference to the eighth aspect, in a possible implementation, the chip system further includes the memory, and the memory stores a computer program or computer instructions.

### BRIEF DESCRIPTION OF DRAWINGS

FIG. 1 is a functional block diagram of a vehicle according to an embodiment of this application;
FIG. 2 is a schematic diagram of sensing ranges of various sensors;
FIG. 3(a) and FIG. 3(b) are a schematic diagram of constructing a map when a vehicle travels into an internal road for the first time according to an embodiment of this application;
FIG. 4 is a schematic diagram of triggering map construction through a user operation according to an embodiment of this application;
FIG. 5 is another schematic diagram of triggering map construction through a user operation according to an embodiment of this application;
FIG. 6(a) and FIG. 6(b) are a schematic diagram of performing APA based on constructed map information after a vehicle travels into an internal road again according to an embodiment of this application;
FIG. 7(a) and FIG. 7(b) are a schematic diagram of performing RPA based on constructed map information after a vehicle travels into an internal road again according to an embodiment of this application;
FIG. 8 is a schematic diagram of performing AVP based on constructed map information after a vehicle travels into an internal road again according to an embodiment of this application;
FIG. 9(a) and FIG. 9(b) are a schematic diagram of parking a vehicle in another parking space according to an embodiment of this application;
FIG. 10(a) and FIG. 10(b) are a schematic diagram of performing AVP based on constructed map information after a vehicle travels into an internal road again according to an embodiment of this application;
FIG. 11 is a schematic architectural diagram of a system according to an embodiment of this application;
FIG. 12 is another schematic architectural diagram of a system according to an embodiment of this application;
FIG. 13 is a schematic diagram of constructing a map by a composition module according to an embodiment of this application;
FIG. 14 shows a process of inputting an image to a U-shaped network (UNET) by a composition module to perform feature extraction according to an embodiment of this application;
FIG. 15 is a schematic flowchart of auto parking according to an embodiment of this application;
FIG. 16 is a schematic flowchart of a method for performing AVP on a vehicle according to an embodiment of this application;
FIG. 17 is a schematic flowchart of a method for performing APA on a vehicle according to an embodiment of this application;
FIG. 18 is a schematic flowchart of an auto parking method according to an embodiment of this application; and
FIG. 19 is a schematic block diagram of an auto parking apparatus according to an embodiment of this application.

### DESCRIPTION OF EMBODIMENTS

The following describes the technical solutions of this application with reference to the accompanying drawings.

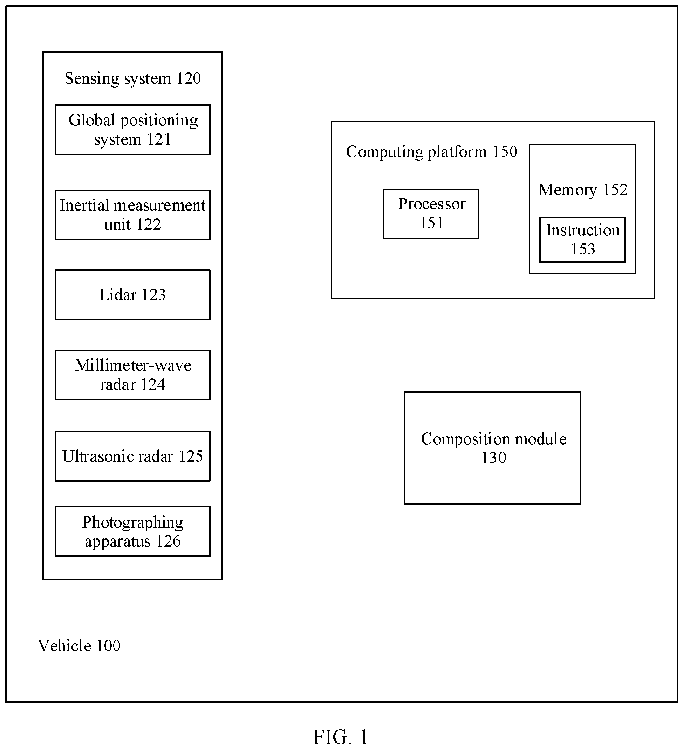

FIG. 1 is a functional block diagram of a vehicle 100 according to an embodiment of this application. The vehicle 100 may be configured to be in an autonomous driving mode or a semi-autonomous driving mode. For example, the vehicle 100 may obtain environment information around the vehicle 100 by using a sensing system 120, and obtain an autonomous driving policy by analyzing the environment information, to implement autonomous driving, or present an analysis result to a user to implement semi-autonomous driving.

The sensing system 120 may include several types of sensors that sense the environment information around the vehicle 100. For example, the sensing system 120 may include one or more of a global positioning system 121 (the global positioning system may be a GPS system, a BeiDou system, or another positioning system), an inertial measurement unit (inertial measurement unit, IMU) 122, a lidar 123, a millimeter-wave radar 124, an ultrasonic radar 125, and a photographing apparatus 126.

The vehicle 100 may include a composition module 130. The composition module 130 may be configured to draw an environment map by using technologies such as an object recognition algorithm, a structure from motion (structure from motion, SFM) algorithm, video tracking, and simultaneous localization and mapping (simultaneous localization and mapping, SLAM).

Some or all of functions of the vehicle 100 are controlled by a computing platform 150. The computing platform 150 may include at least one processor 151. The processor 151 may execute an instruction 153 stored in a non-transitory computer-readable medium like a memory 152. In some embodiments, the computing platform 150 may alternatively be a plurality of computing devices that control an individual component or a subsystem of the vehicle 100 in a distributed manner.

The processor 151 may be any conventional processor, for example, a central processing unit (central processing unit, CPU). Alternatively, the processor 151 may further include a graphics processing unit (graphics processing unit, GPU), a field programmable gate array (field programmable gate array, FPGA), a system-on-a-chip (system-on-a-chip, SOC), an application-specific integrated circuit (application-specific integrated circuit, ASIC) or a combination thereof.

In addition to the instruction 153, the memory 152 may store data such as a road map, route information, and a location, a direction, a speed, and other such vehicle data of the vehicle. The data may be used by the vehicle 100 and the computing platform 150 during an operation of the vehicle 100 in an autonomous mode, a semi-autonomous mode, and/or a manual mode.

The computing platform 150 may control functions of the vehicle 100 based on inputs received from various subsystems (for example, the sensing system 120 and the composition module 130). For example, the computing platform 150 may perform auto parking based on vehicle location information determined by the global positioning system 121 in the sensing system 120 and map information of an internal road constructed by the composition module 130.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing components are merely examples. During an actual application, components in the foregoing modules may be added or removed based on an actual requirement. FIG. 1 should not be construed as a limitation on embodiments of this application.

The vehicle 100 may include an advanced driving assistant system (advanced driving assistant system, ADAS). The ADAS obtains information around the vehicle by using a plurality of sensors on the vehicle (including but not limited to: the lidar, the millimeter-wave radar, the photographing apparatus, an ultrasonic sensor, the global positioning system, the inertial measurement unit), and analyzes and processes the obtained information to implement functions such as obstacle sensing, target recognition, vehicle positioning, route planning, and driver monitoring/reminding, so as to improve driving safety, automation, and comfort of the vehicle.

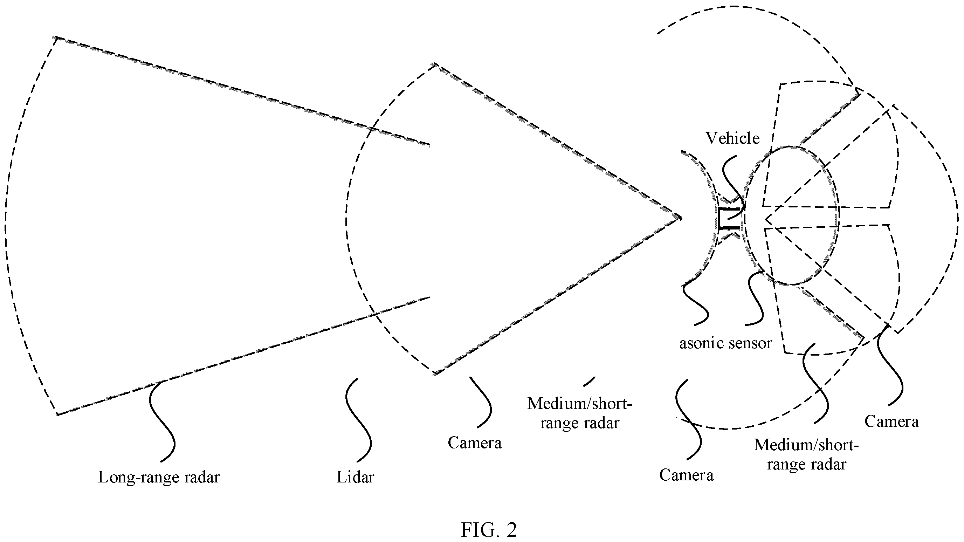

FIG. 2 is a schematic diagram of sensing ranges of various sensors. The sensors may include, for example, the lidar, the millimeter-wave radar, the photographing apparatus, the ultrasonic sensor that are shown in FIG. 1. The millimeter-wave radar may include a long-range radar and a medium/short-range radar. Currently, a sensing range of the lidar is about 80 to 150 meters, a sensing range of the long-range millimeter-wave radar is about 1 to 250 meters, a sensing range of the medium/short-range millimeter-wave radar is about 30 to 120 meters, a sensing range of a camera is about 50 to 200 meters, and a sensing range of the ultrasonic radar is about 0 to 5 meters.

In terms of logical functions, the ADAS system generally includes three main functional modules: a sensing module, a decision module and an execution module. The sensing module senses an ambient environment of a vehicle body by using a sensor, and inputs corresponding real-time data to a decision processing center. The sensing module mainly includes a vehicle-mounted camera, an ultrasonic radar, a millimeter-wave radar, a lidar, and the like. Based on information obtained by the sensing module, the decision module makes a corresponding decision by using a computing apparatus and an algorithm. After receiving a decision signal from the decision module, the execution module takes a corresponding action like driving, lane change, steering, braking, or warning.

At different autonomous driving levels (L0 to L5), the ADAS can implement different levels of autonomous driving assistance based on an artificial intelligence algorithm and information obtained by the plurality of sensors. The autonomous driving levels (L0 to L5) are based on a classification standard defined by the society of automotive engineers (society of automotive engineers, SAE). L0 indicates no automation. L1 indicates driving assistance. L2 indicates partial automation. L3 indicates conditional automation. L4 indicates high automation. L5 indicates full automation. Tasks of monitoring and responding to a road condition at L1 to L3 are performed by a driver and a system together. In this case, the driver needs to take over a dynamic driving task. At L4 and L5, the driver is allowed to fully transform into a role of a passenger. Currently, functions that can be implemented by the ADAS mainly include but are not limited to: adaptive cruise, automatic emergency braking, auto parking, blind spot monitoring, traffic warning/braking at an intersection ahead, traffic warning/braking at an intersection behind, collision warning of a vehicle ahead, lane departure warning, lane keeping assistance, collision warning of a vehicle behind, traffic sign recognition, traffic jam assistance, highway assistance, and the like. It should be understood that the foregoing functions may correspond to specific modes at different autonomous driving levels (L0 to L5). A higher autonomous driving level corresponds to a smarter mode. For example, auto parking may include APA, RPA, AVP, and the like. For APA, a driver does not need to control a steering wheel, but still needs to control a throttle and a brake pedal of a vehicle. For RPA, a driver may use a terminal (for example, a mobile phone) to remotely park a vehicle outside the vehicle. For AVP, a vehicle can be parked without a driver. In terms of a corresponding autonomous driving level, APA is at approximately L1, RPA is at approximately L2 to L3, and AVP is at approximately L4.

The ADAS system can be combined with a high-definition map to implement/improve various functions. Here are some examples. (1) High-precision positioning: Conventional positioning based on the global positioning system can usually reach only meter-level precision, and is greatly affected by weather, an urban building, and an underground scenario. However, positioning based on the high-definition map can reach centimeter-level precision, so that more accurate positioning information can be provided for a vehicle based on the high-definition map. In addition, compared with a conventional map, the high-definition map provides information in more dimensions such as a road slope and a curvature, and can be better combined with an algorithm module of the ADAS system based on the information in more dimensions. (2) Auxiliary environment awareness: Information such as a road and traffic around a vehicle, and basic settings of the vehicle can be obtained based on the high-definition map, to provide auxiliary information for a sensing system of the ADAS. (3) Navigation and path planning: More accurate and optimized path planning can be implemented based on information about the high-definition map. For example, lane-level precision navigation can be implemented at an intersection, and a vehicle location can also be accurately obtained in an overhead road scenario, so that navigation in a three-dimensional scenario is provided for the vehicle.

In embodiments of this application, the ADAS system may also be combined with map information constructed by the vehicle. When the vehicle is located on the internal road and previously constructs the map information of the internal road, the vehicle may complete auto parking based on positioning information of the vehicle and the map information.

As described above, currently, some companies have launched an AVP technology for transforming a parking lot. A sensor network (for example, 25 lidars per 3 square meters on average), a wireless communication network, a parking lot management server, and the like need to be deployed in the parking lot. This brings excessive costs of transforming the parking lot. Consequently, it is difficult to promote the AVP technology. In addition, some vendors have launched a home zone parking pilot technology that includes a large quantity of user operations, for example, setting a starting point, manually driving to a parking space, and setting an end point by a user. When the user drives to the starting point next time, the vehicle enters a home zone parking pilot mode again. For the user, the home zone parking pilot technology includes excessive user operations and causes excessive learning costs of the user, resulting in poor user experience.

In view of this, embodiments of this application provide an auto parking method and apparatus, and a vehicle. A parking lot does not need to be transformed, and a user does not need to perform cumbersome operations. When the vehicle travels into an internal road for the first time, the vehicle may automatically construct a map. This process is imperceptible to the user. When the vehicle travels into the internal road for the second time, the previously constructed map may be presented to the user, so that the user performs auto parking conveniently. This helps improve user experience of the user during auto parking.

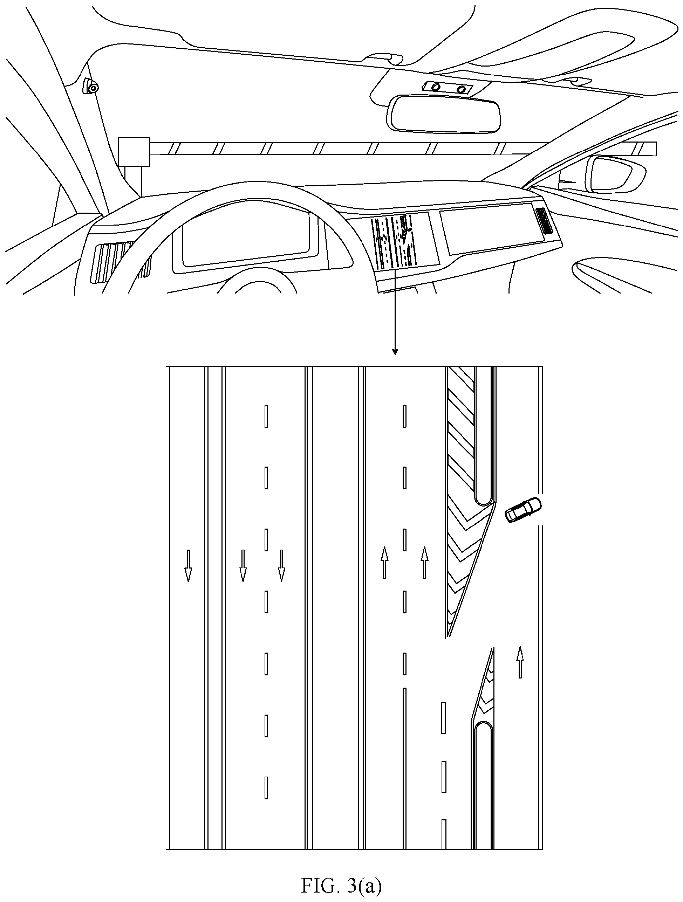

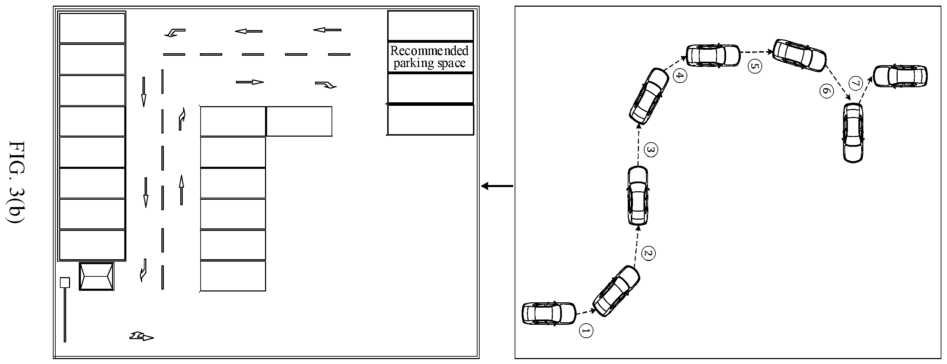

FIG. 3(a) and FIG. 3(b) are a schematic diagram of constructing a map when a vehicle travels into an internal road for the first time according to an embodiment of this application.

As shown in FIG. 3(a), map information (for example, map information shown in FIG. 3(a)) is displayed on a central control screen during traveling of the vehicle. When the vehicle determines, based on the map information, that the vehicle travels into the internal road from an external road for the first time, or when the vehicle determines, based on the map information, that the vehicle leaves the external road for the first time, the vehicle may be triggered to construct a map.

In an embodiment, the vehicle may determine, based on a high-definition map or a standard map (standard map, SD), whether to travel into an internal road from an external road.

It should be understood that, in embodiments of this application, the external road may be a road whose map information is locally stored in the vehicle, or a road whose map information obtained by the vehicle from a server includes information such as road-level information (or road-level information and lane-level information), a road name, and a traffic light. The internal road may be a road whose map information is not locally stored in the vehicle, or a road whose map information obtained by the vehicle from the server does not include the foregoing information. For example, the internal road may be a surface parking lot or an underground parking lot.

As shown in FIG. 3(b), when the vehicle determines to travel into an internal road for the first time, the vehicle may construct a map of the internal road. When the vehicle travels along routes ① to ⑦ and finally stops at a parking space, the vehicle may construct map information shown in FIG. 3(b). The map information may include parking space information recognized by the vehicle, a barrier bar of a parking lot, and a driving indication sign (for example, a straight through only sign, a left turn only sign, a right turn only sign, and a left turn and straight sign) on a road inside the parking lot.

It should be understood that, in embodiments of this application, the vehicle may construct a two-dimensional map or a three-dimensional map after travelling into the internal road from the external road. An example in which the vehicle constructs the two-dimensional map is used below for description.

It should also be understood that, because the vehicle travels along the routes ① to ⑦, the vehicle constructs a map based on data collected by a sensor (for example, a camera, an ultrasonic radar, a millimeter-wave radar, or a lidar) during this process. The map information that is shown in FIG. 3(b) and constructed by the vehicle may be a part of map information of the internal road (for example, the parking lot).

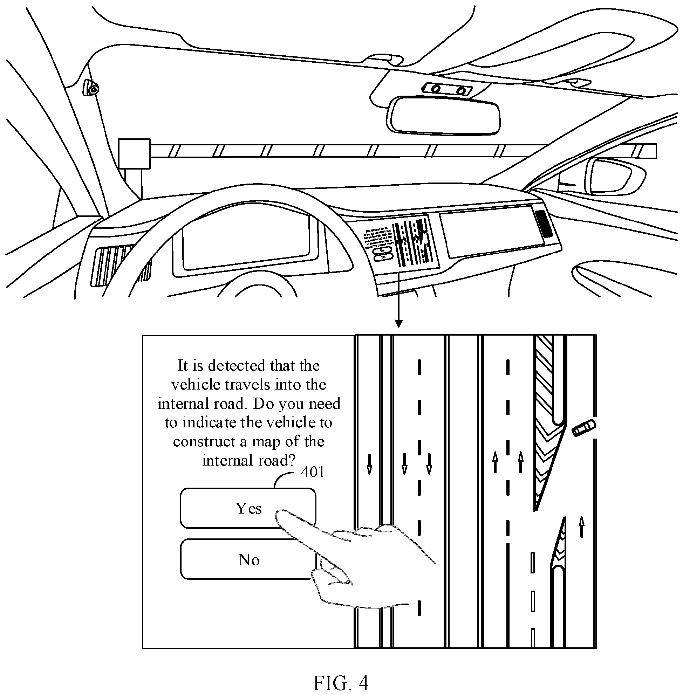

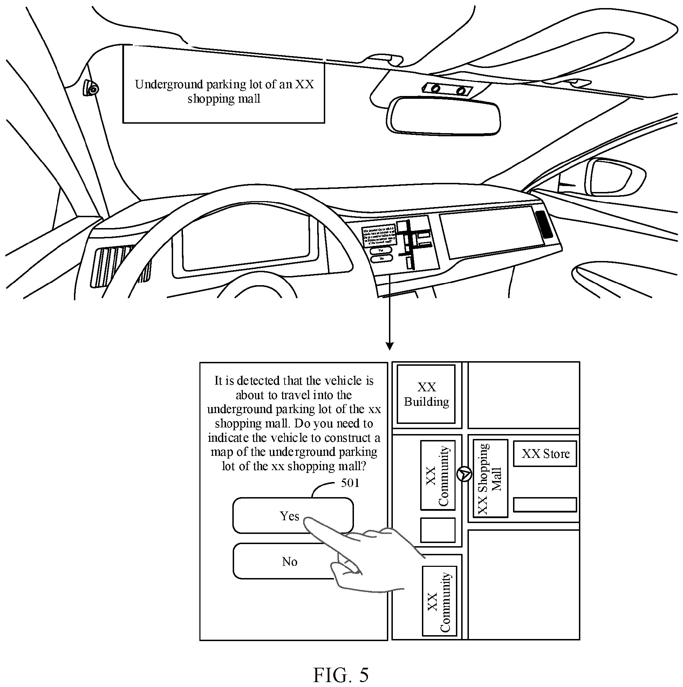

In an embodiment, when determining, based on the map information, that the vehicle travels into the internal road (for example, a surface parking lot) from an external road for the first time, the vehicle may start to construct a map, where this process is imperceptible to the user, that is, the vehicle may construct a map in the background; or the vehicle may further give the user a prompt indicating whether to construct a map. FIG. 4 and FIG. 5 are two schematic diagrams of triggering map construction through a user operation.

As shown in FIG. 4, when the vehicle determines, based on the map information, that the vehicle travels into the internal road from an external road for the first time, the vehicle may display, on the central control screen, prompt information "It is detected that the vehicle travels into the internal road. Do you need to indicate the vehicle to construct a map of the internal road?" When the vehicle detects an operation of tapping a control 401 by the user on the central control screen, the vehicle may be triggered to start constructing a map of the internal road.

As shown in FIG. 5, when the vehicle determines, based on the map information, that the vehicle travels into the internal road (for example, an underground parking lot of an xx shopping mall) from an external road for the first time, the vehicle may display, on the central control screen, prompt information "It is detected that the vehicle is about to travel into the underground parking lot of the shopping mall. Do you need to indicate the vehicle to construct a map of the underground parking lot of the xx shopping mall?" When the vehicle detects an operation of tapping a control 501 by the user on the central control screen, the vehicle may be triggered to start constructing a map of the internal road.

In an embodiment, the vehicle may determine, based on positioning information of the vehicle and the map information, whether to construct a map. For example, during navigation of the vehicle based on the map information, if a signal strength of the positioning information of the vehicle is less than a first threshold, and duration in which the signal strength is less than the first threshold is greater than or equal to preset duration, the vehicle may be triggered to construct a map.

It should be understood that, in embodiments of this application, when the signal strength of the positioning information of the vehicle is less than the first threshold, and the duration in which the signal strength is less than the first threshold is greater than or equal to the preset duration, the vehicle may determine that the vehicle is located in an area (for example, an underground parking lot) with a weak positioning signal, so that the vehicle may be triggered to construct a map.

In an embodiment, if the signal strength of the positioning information of the vehicle is less than the first threshold, the duration in which the signal strength is less than the first threshold is greater than or equal to the preset duration, and the vehicle detects information about an identifier of the parking lot, the vehicle may be triggered to construct a map. For example, the identifier of the parking lot includes but is not limited to one or more of a parking space, an obstacle, a barrier bar, and a driving indication sign.

In an embodiment, the vehicle may further determine, based on the map information and a historical record stored in the vehicle, whether to construct a map. For example, when the vehicle determines, based on the map information, that a frequency at which the vehicle travels into the internal road from an external road in a period of time (for example, one week or one month) is greater than or equal to a preset frequency (for example, three times), the vehicle may be triggered to construct a map.

In an embodiment, the vehicle may further determine, based on user information stored in the vehicle and the map information, whether to construct a map. For example, the user information stored in the vehicle includes address information (for example, a city A) of the user. When the vehicle determines, based on the map information, that the vehicle leaves an external road in the city A for the first time, the vehicle may be triggered to construct a map.

When the user drives the vehicle from the city A into a city B, if the vehicle determines, based on the map information, that the vehicle leaves an external road in the city B, the vehicle may not be triggered to construct a map; or if the vehicle determines, based on the map information, that the vehicle travels out of an external road in the city B, the vehicle may give the user a prompt indicating whether to construct a map. When the vehicle detects an operation that the user determines to construct a map of the internal road, the vehicle may be triggered to construct a map of the internal road in the city B.

In an embodiment, the vehicle may further determine, based on map information stored in a cloud server, whether to construct a map. For example, when the vehicle determines, based on the map information, that the vehicle travels into the internal road from an external road, the vehicle may request map information of the internal road from the cloud server. If the cloud server does not store the map information of the internal road, the vehicle may be triggered to construct a map of the internal road.

In an embodiment, when constructing a map, the vehicle may further collect parking location information (for example, a "recommended parking space" displayed in the map information constructed by the vehicle in FIG. 3(b)), or the vehicle may give the user a prompt indicating whether to collect parking location information. When the user confirms to collect the location information, the vehicle may mark the location information in the constructed map information.

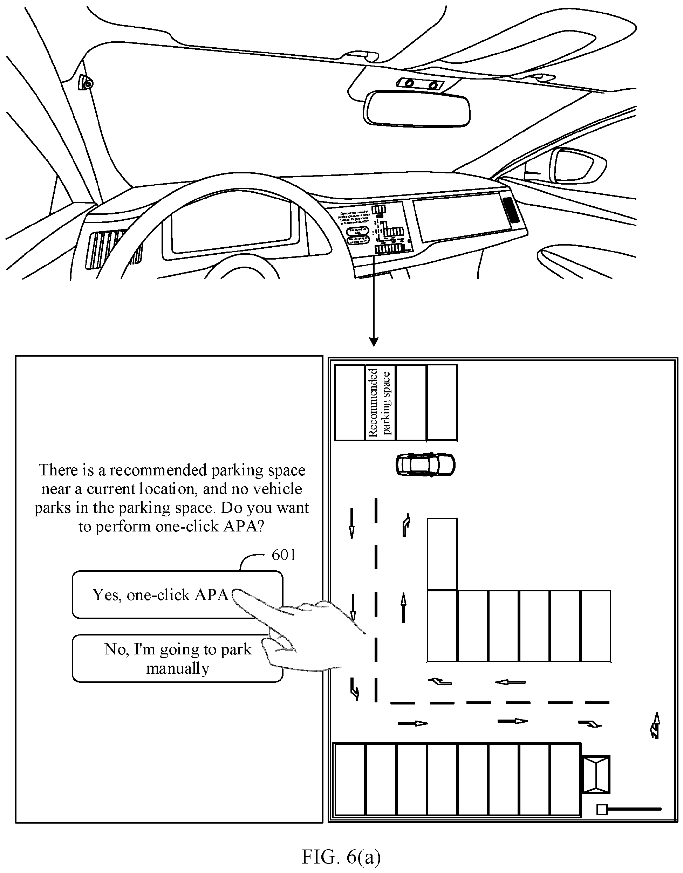

The foregoing describes, with reference to FIG. 3(a) to FIG. 5, a process of constructing a map after the vehicle travels into an internal road. The following describes, with reference to FIG. 6(a) to FIG. 8, a process of giving, after the vehicle travels into the internal road again, the user a prompt of constructed map information and a prompt of parking automatically.

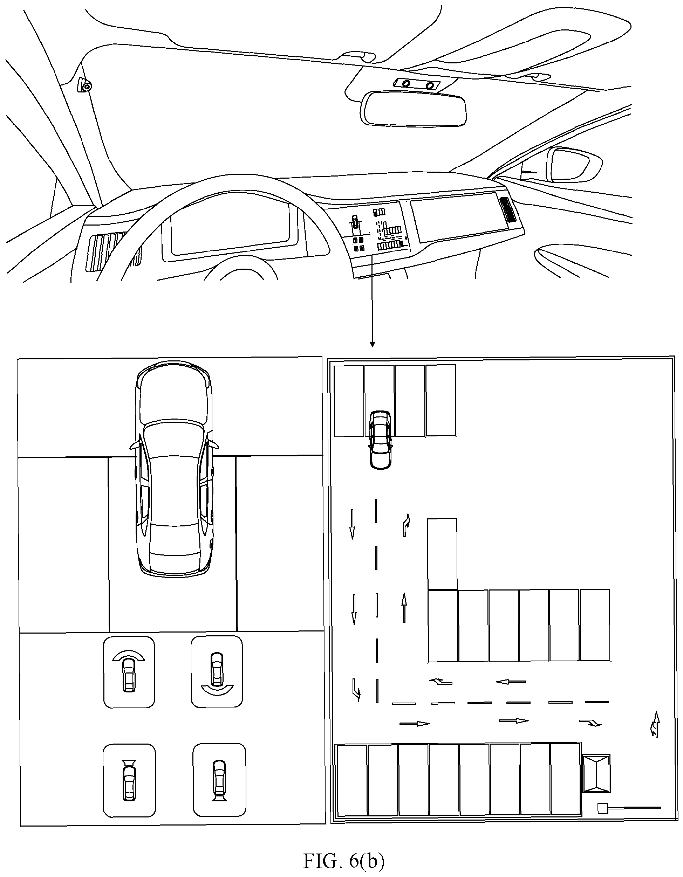

FIG. 6(a) and FIG. 6(b) are a schematic diagram of performing APA based on constructed map information after a vehicle travels into an internal road again according to an embodiment of this application.

As shown in FIG. 6(a), when the vehicle travels into the internal road again and is located near a recommended parking space, the vehicle may give, on the central control screen, the user a prompt that "There is a recommended parking space near a current location, and no vehicle parks in the parking space. Do you want to perform one-click APA?" When the vehicle detects an operation of tapping a control 601 on the central control screen by the user, the vehicle may perform APA.

As shown in FIG. 6(b), when the vehicle detects the operation of tapping the control 601 by the user, the vehicle may perform APA. In FIG. 6(b), the vehicle may perform auto parking based on the map information constructed last time. In addition, the vehicle may display, on the central control screen, an image around the vehicle and location information of the vehicle on a map.

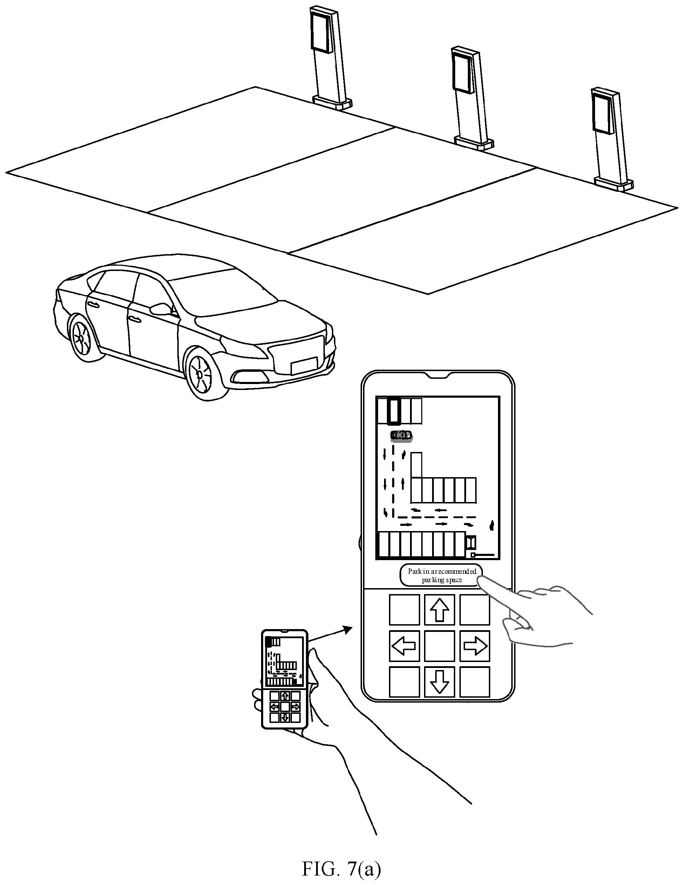

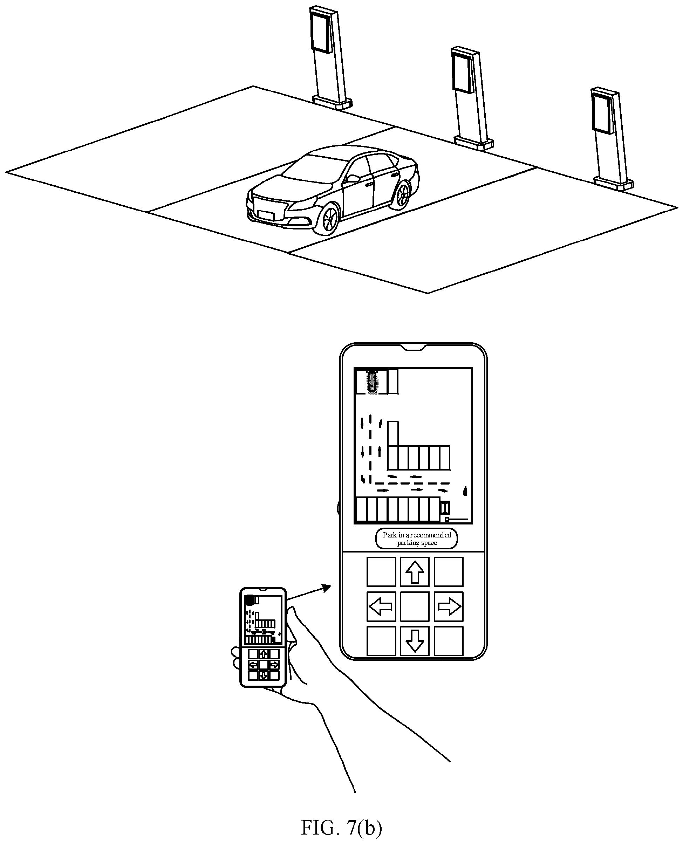

FIG. 7(a) and FIG. 7(b) are a schematic diagram of performing RPA based on constructed map information after a vehicle travels into an internal road again according to an embodiment of this application.

As shown in FIG. 7(a), when the vehicle travels into the internal road again and is located near the recommended parking space, the user may get off the vehicle and perform RPA by using a mobile phone. When the user opens an auto parking application on the mobile phone, the mobile phone can display map information previously constructed by the vehicle. In FIG. 7(a), the mobile phone may display map information, a control for parking in a recommended parking space, and a control for controlling the vehicle to travel up, down, left, and right. When the mobile phone detects an operation of tapping the control for parking in a recommended parking space by the user, the vehicle may perform RPA.

In an embodiment, after the vehicle travels into the internal road for the first time and constructs a map of the internal road, the vehicle may send the constructed map information to the mobile phone. Optionally, the vehicle and the mobile phone may log in with a same account.

Alternatively, the vehicle may store the map information in the cloud server. When the mobile phone detects that the user opens the auto parking application, the mobile phone may request the map information from the cloud server. Therefore, when detecting that the user opens the auto parking application, the mobile phone may display the map information.

As shown in FIG. 7(b), when the mobile phone detects the operation of tapping the control for parking in a recommended parking space by the user, the mobile phone may send indication information to the vehicle. The indication information indicates the vehicle to park in the recommended parking space. In response to the received indication information, the vehicle performs auto parking based on the map information constructed last time. In addition, the vehicle may send location information of the vehicle to the mobile phone in real time, and the mobile phone may display the location information of the vehicle on the map.

It should be understood that, for a process in which the vehicle automatically travels into the recommended parking space after receiving the indication information of the mobile phone, refer to an APA process.

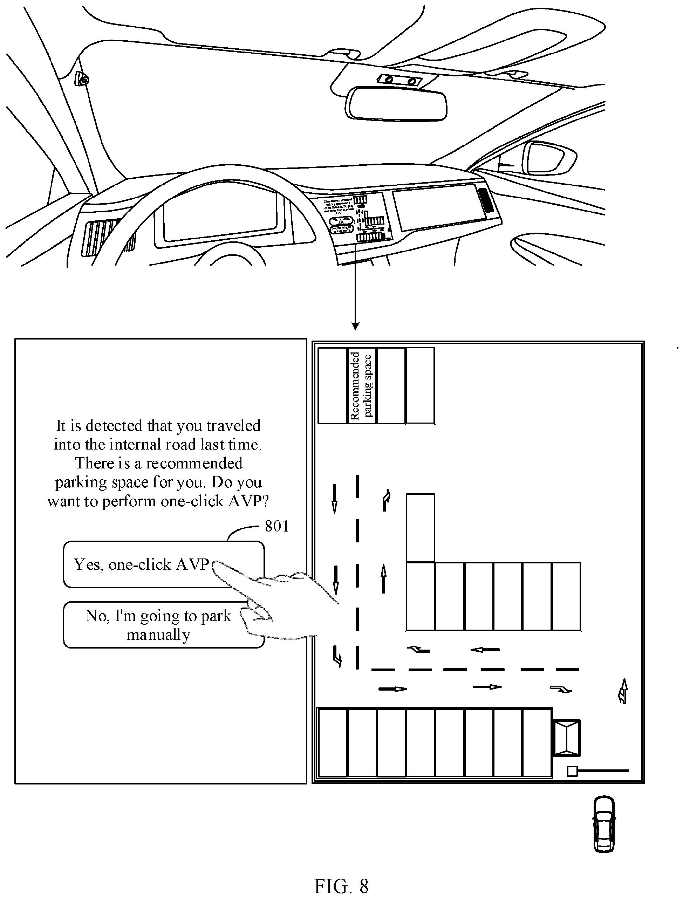

FIG. 8 is a schematic diagram of performing AVP based on constructed map information after a vehicle travels into an internal road again according to an embodiment of this application.

As shown in FIG. 8, when the vehicle travels into the internal road from an external road again, the vehicle may obtain the previously constructed map information (for example, a part of map information of the parking lot) of the internal road based on the positioning information. The vehicle gives, on the central control screen, the user a prompt that "It is detected that you traveled into the internal road last time. There is a recommended parking space for you. Do you want to perform one-click AVP?" When the vehicle detects an operation of tapping a control 801 on the central control screen by the user, the vehicle may perform AVP.

In response to the detected operation of tapping the control 801 on the central control screen by the user, the vehicle may park in the recommended parking space based on the previously constructed map information and driving routes (for example, the route ① to the route ⑦ shown in FIG. 3(b)).

In an embodiment, when the vehicle may determine, based on the positioning information of the vehicle, that the vehicle leaves the external road and identifies, by using a photographing apparatus, identification information (for example, a barrier bar of a parking lot) of an entrance to the parking lot, the vehicle may give the user a prompt that "It is detected that you traveled into the internal road last time. There is a recommended parking space for you. Do you want to perform one-click AVP?"

In an embodiment, during AVP, the vehicle finds that a vehicle has parked in the recommended parking space, for example, when the vehicle travels to a location ⑥, the vehicle finds that another vehicle has parked in the recommended parking space. In this case, the vehicle may continue to find a parking space within a preset range (for example, 10 meters) starting from the location ⑥ shown in FIG. 3(a) and FIG. 3(b), and automatically park the vehicle in the parking space after finding the parking space.

In an embodiment, if the vehicle still does not find the parking space within the preset range, the vehicle may stop travelling, and the vehicle may send the indication information to the mobile phone, so that the mobile phone may give the user a prompt that the vehicle does not find a parking space and the vehicle is in a state that the vehicle has stopped travelling.

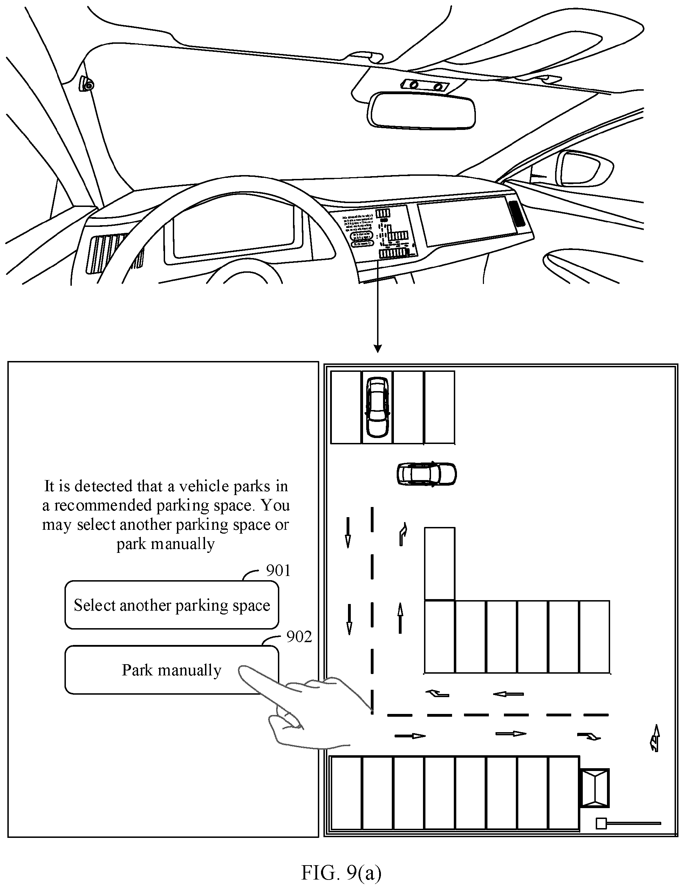

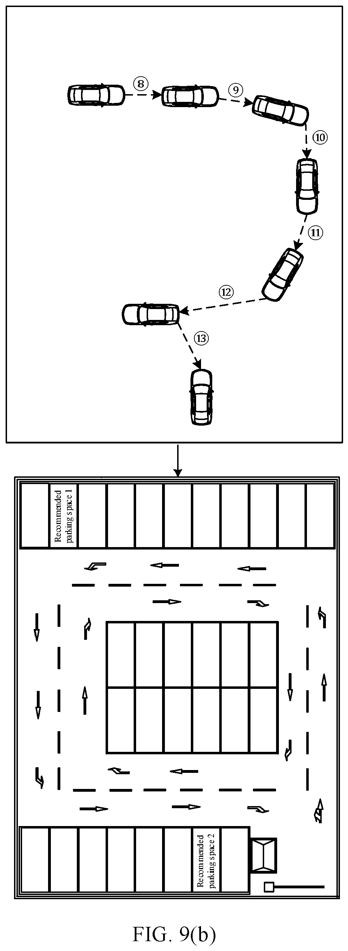

FIG. 9(a) and FIG. 9(b) are a schematic diagram of parking a vehicle in another parking space according to an embodiment of this application.

As shown in FIG. 9(a), during AVP of the vehicle, after the vehicle travels along the routes ① to ⑥ shown in FIG. 3(b) and reaches a place near the recommended parking space, when the vehicle determines that another vehicle parks in the recommended parking space, the vehicle may give the user a prompt that "It is detected that a vehicle parks in a recommended parking space. You may select another parking space or park manually". In addition, the vehicle may further provide the user with a control 901 for selecting another parking space and a control 902 for manually parking. When the vehicle detects an operation of tapping the control 902 for manual parking by the user, the vehicle may give a control right to a driver, so that the driver selects a parking space to park.

In an embodiment, when the vehicle detects an operation of tapping the control 901 for selecting another parking space by the user, the vehicle may continue to detect, on the map information, parking space information selected by the user. After the vehicle detects that the user selects another parking space, the vehicle may travel based on the map information and park in the another parking space.

As shown in FIG. 9(b), when the vehicle detects that the vehicle has parked in a parking space along routes ⑧ to ⑬, the vehicle may supplement the previously constructed map information. As shown in FIG. 9(b), when the vehicle travels along the routes 8 to 13, the vehicle may continue to construct a map, and finally obtain more complete map information of the internal road.

In an embodiment, when constructing a map, the vehicle may further collect parking location information (for example, a "recommended parking space 1" and a "recommended parking space 2" displayed in map information constructed by the vehicle in FIG. 9(b)); or the vehicle may give the user a prompt indicating whether to collect parking location information. When the user confirms to collect the location information, the vehicle may mark the location information in the constructed map information.

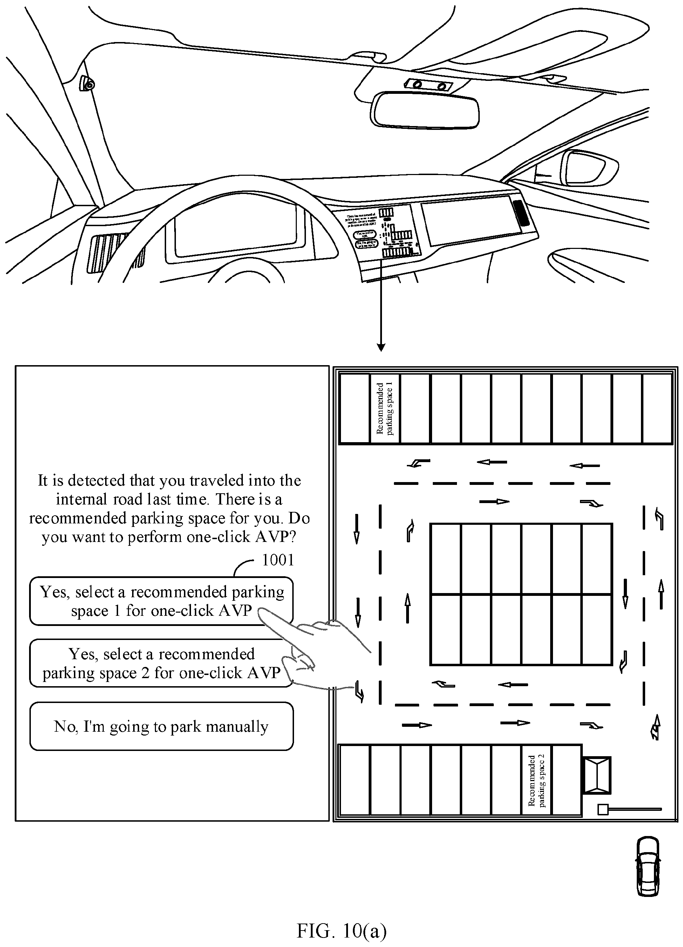

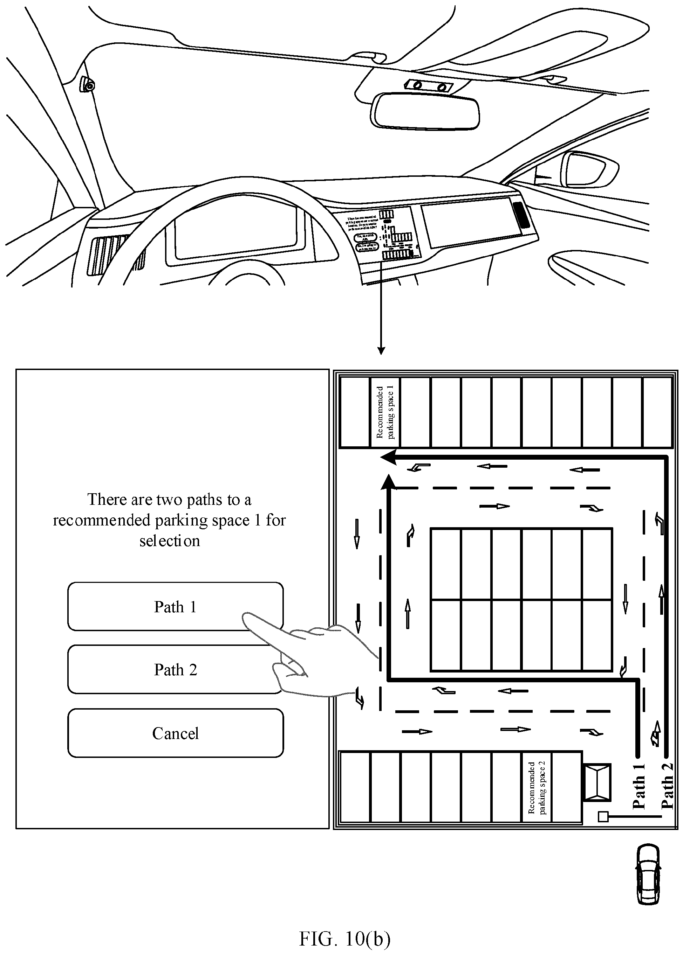

FIG. 10(a) and FIG. 10(b) are a schematic diagram of performing AVP based on constructed map information after a vehicle travels into an internal road again according to an embodiment of this application.

As shown in FIG. 10(a), when the vehicle travels into the internal road from the external road again, the vehicle may obtain the previously constructed map information (for example, the foregoing more complete map information) of the internal road. The vehicle may give, on the central control screen, the user a prompt that "It is detected that you traveled into the internal road last time. There is a recommended parking space for you. Do you want to perform one-click AVP?" In addition, the vehicle may display a plurality of controls (for example, a control 1001 for selecting a recommended parking space 1 for one-click AVP, a control for selecting a recommended parking space 2 for one-click AVP, and a control for parking by the user) on the central control screen. When the vehicle detects an operation of tapping the control 1001 by the user on the central control screen, the vehicle may display, on the central control screen, a user interface (user interface, UI) shown in FIG. 10(b).

As shown in FIG. 10(b), when the vehicle detects that the user selects the recommended parking space 1 for AVP, the vehicle may plan a path 1 and a path 2 based on the constructed map information and location information of the recommended parking space 1. The path 1 and the path 2 are two different paths obtained after the vehicle travels from a current location to the recommended parking space 1. In this way, the path 1 and the path 2 may be displayed in the map information on the central control screen. In addition, the vehicle may further give, on the central control screen, the user a prompt that "There are two paths to a recommended parking space 1 for selection". As shown in FIG. 10(b), when the vehicle detects an operation of selecting the path 1 by the user, the vehicle may park the vehicle in the recommended parking space 1 along the path 1.

The foregoing describes, with reference to FIG. 3(a) to FIG. 10(b), the auto parking process provided in embodiments of this application. The following describes a specific implementation process of the auto parking with reference to the accompanying drawings.

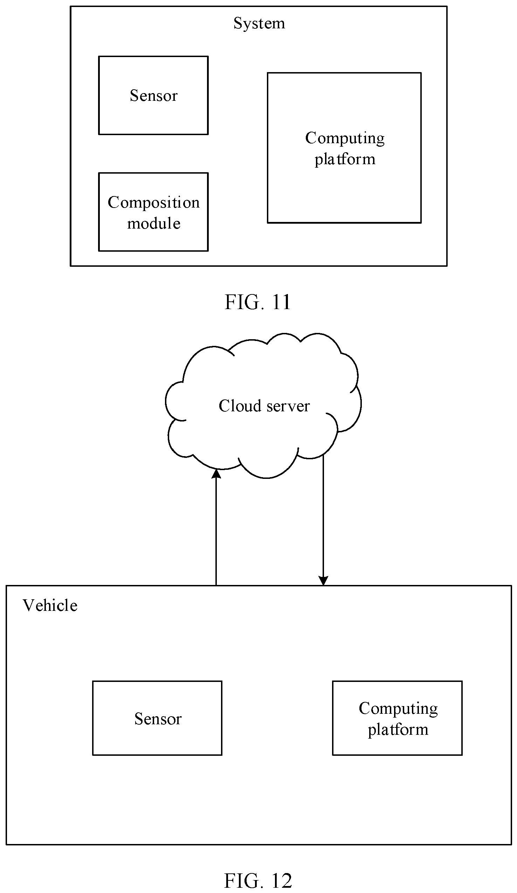

FIG. 11 is a schematic architectural diagram of a system according to an embodiment of this application. As shown in FIG. 11, the system may include a sensor, a composition module, and a computing platform. The sensor may include one or more sensors in the sensing system 120, the composition module may be the composition module 130, and the computing platform may be the computing platform 150.

The computing platform may determine, based on map information stored in the vehicle (or map information obtained by the vehicle from the server) and the positioning information, that the vehicle travels into an internal road for the first time. Then the computing platform indicates the sensor to send the collected data to the composition module, and indicates the composition module to construct new map information based on the data collected by the sensor.

It should be understood that, in embodiments of this application, the composition module may be located outside the computing platform, or may be located inside the computing platform. This is not specifically limited in embodiments of this application.

FIG. 12 is another schematic architectural diagram of a system according to an embodiment of this application. The system includes a vehicle and a cloud server. The vehicle includes a sensor and a computing platform, and the cloud server includes a composition module. When the computing platform determines that the vehicle leaves the external road, the computing platform may control the sensor to send the collected data to the cloud server, and the cloud server may construct a map based on the data collected by the sensor of the vehicle. After the map is constructed, the cloud server may send the constructed map information to the vehicle. Alternatively, when the vehicle travels into the internal road again, the vehicle may obtain map information from the cloud server.

For example, the computing platform may determine, based on map information (for example, an SD map or a high-definition map) stored in the vehicle and the positioning information of the vehicle, whether the vehicle leaves the external road. If the computing platform determines that the vehicle leaves the external road and travels into the internal road, the computing platform may indicate the composition module to obtain the data collected by the sensor and construct a map based on the collected data.

For another example, the computing platform may determine, based on map information (for example, an SD map or a high-definition map) sent by a map server and the positioning information of the vehicle, whether the vehicle leaves the external road.

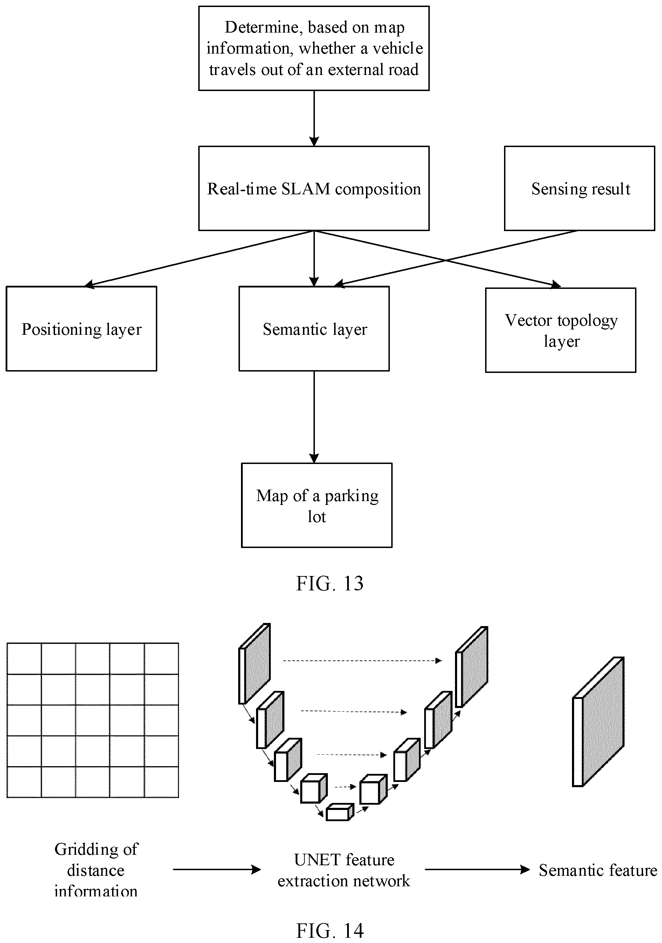

When the vehicle travels on the internal road, the composition module may construct a map based on the data collected by the sensor. In the following example, as shown in FIG. 13, the composition module constructs a map by using an SLAM composition technology in embodiments of this application.

The sensor of the vehicle may include a photographing apparatus, a global positioning system, an inertial measurement unit, and a wheel odometer. The photographing apparatus may include a front-view camera, a rear-view camera, and two side-view cameras (located at a left side and a right side of the vehicle respectively). The four cameras can also be equipped with fisheye lenses. The front-view camera, the rear-view camera, the camera at the left side of the vehicle, and the camera at the right side of the vehicle may respectively output image information of a front side of the vehicle, image information of a rear side of the vehicle, image information of the left side of the vehicle, and image information of the right side of the vehicle to the composition module. The composition module may perform inverse perspective mapping (inverse perspective mapping, IPM) to synthesize image information from four cameras into one IPM image.

The composition module may perform feature extraction on the IPM image. For example, FIG. 14 shows a process of inputting an IPM image to a U-shaped network (UNET) by a composition module to perform feature extraction according to an embodiment of this application. During gridding of distance information, data in each block is convolved. On a UNET feature extraction network, black downward solid arrows on a left side indicate a maximum 2 x 2 pooling operation, which reduces a feature dimension by half; and some upward solid arrows on a right side indicate an upsampling process, which doubles a feature dimension. A dotted line represents a copy process. A feature transferred from the dotted line is superimposed with an upsampled feature on a right side, and an obtained feature is used as an input feature of a convolution. The U-shaped network outputs a semantic feature for each pixel in the IPM image. The semantic feature includes but is not limited to a turnstile, a barrier bar, a lane, a parking line, a road surface indication sign, a speed bump, a wall surface, an obstacle, and the like.

It should be understood that a process in which the composition module outputs a semantic feature based on the IPM image may also be understood as a process in which the composition module constructs a semantic layer.

After performing feature extraction on the IPM image, the composition module may start to construct a map. The composition module may determine, by using an IMU and a wheel speed odometer, a location in a vehicle coordinate system constructed by the vehicle. The location in the vehicle coordinate system may be a current location of the vehicle relative to a location at which the vehicle just travels into the internal road (for example, the location at which the vehicle just travels into the internal road may be an origin in the vehicle coordinate system). Alternatively, the composition module may determine an absolute location of the vehicle in a world coordinate system by using the global positioning system. The vehicle may build a positioning layer by using the global positioning system, the IMU, and the wheel speed odometer.

By matching the positioning layer with the semantic layer, the composition module may construct the map information of the internal road. For example, as shown in FIG. 3(b), when the vehicle is at the location ①, the composition module may match the location information of the vehicle with a semantic feature output by the U-shaped network, so that the vehicle may construct map information (including a turnstile, a barrier bar, a lane, a parking line, a road surface indication sign, and the like) of the location ①. By analogy, the vehicle may construct map information of each of the locations ② to ⑦. Finally, the vehicle may combine the map information to obtain map information constructed by the vehicle here.

In an embodiment, the composition module may construct a part of map information of the parking lot based on the locations ① to ⑦. As shown in FIG. 9(b), when the vehicle travels in the rest part of the parking lot, the composition module may continue to construct a map in the foregoing manner, to obtain more complete map information of the parking lot.

In an embodiment, when the composition module constructs all or a part of map information of the parking lot, the composition module may further generate a vector topology layer. The vector topology layer may be understood as a road set relationship layer and a topology relationship layer, and may support route planning. For example, as shown in FIG. 10(a), the composition module has constructed the more complete map information of the parking lot. When the vehicle detects that the user wants to park the vehicle in the recommended parking space 1 through AVP, the composition module may plan the path 1 and the path 2. Both the path 1 and the path 2 are paths from the current location of the vehicle to the recommended parking space 1. In this way, the user may select a path from the path 1 and the path 2, and park the vehicle in the recommended parking space 1.

The foregoing describes a process in which the composition module constructs map information of an internal road when the vehicle travels into the internal road for the first time. The following describes a process in which the vehicle automatically parks when the vehicle travels into the internal road for the second time.

When the vehicle detects, based on the positioning information, that the vehicle travels into the internal road again, the vehicle may give a prompt of displaying the constructed map information on a human machine interface (human machine interface, HMI). Optionally, the vehicle may further display information about a recommended parking space on the map information. The recommended parking space may be a parking space in which the vehicle parks last time.

In an embodiment, the vehicle may display the constructed map information based on the positioning information and identification information of the internal road. For example, when the vehicle travels into the internal road for the first time, it may be recognized, based on the synthesized IPM image, that there is a barrier bar in front of the vehicle. When the vehicle travels into the internal road again, and the vehicle determines, based on the positioning information, that the vehicle is about to travel into the internal road and recognizes the barrier bar based on image information collected by a camera, the vehicle may display the previously constructed map information on the HMI.

In an embodiment, the vehicle may further give the user a prompt indicating whether to perform AVP. For example, as shown in FIG. 8, the vehicle may display, on the HMI, prompt information that "It is detected that you traveled into the internal road last time. There is a recommended parking space for you. Do you want to perform one-click AVP?" When the vehicle detects the operation of tapping the control 801 by the user, the vehicle may perform AVP, and finally parks the vehicle in the recommended parking space. Alternatively, the vehicle may perform AVP when detecting a preset operation (for example, gear shift) of the user.

In an embodiment, when the vehicle determines, based on the positioning information, that the vehicle is near the recommended parking space, the vehicle may give, on the HMI, the user a prompt indicating whether to perform APA. For example, as shown in FIG. 6(a), the vehicle may give, on the HMI, the user a prompt that "There is a recommended parking space near a current location, and no vehicle parks in the parking space. Do you want to perform one-click APA?" When the vehicle detects the operation of tapping the control 601 by the user, or when the vehicle detects a preset operation (for example, gear shift) of the user, the vehicle may perform APA, and finally park in the recommended parking space.

In an embodiment, the vehicle may further send the previously constructed map information to another device (for example, a mobile phone) of the user. When the mobile phone detects that the user opens an application to perform RPA, the mobile phone may display the previously constructed map information. For example, as shown in FIG. 7(a), the mobile phone may display the previously constructed map information. When the mobile phone detects the operation of tapping the control for parking in a recommended parking space by the user, the mobile phone may send indication information to the vehicle. The indication information indicates the vehicle to park in the recommended parking space. In response to receiving the indication information, the vehicle may automatically park in the recommended parking space.

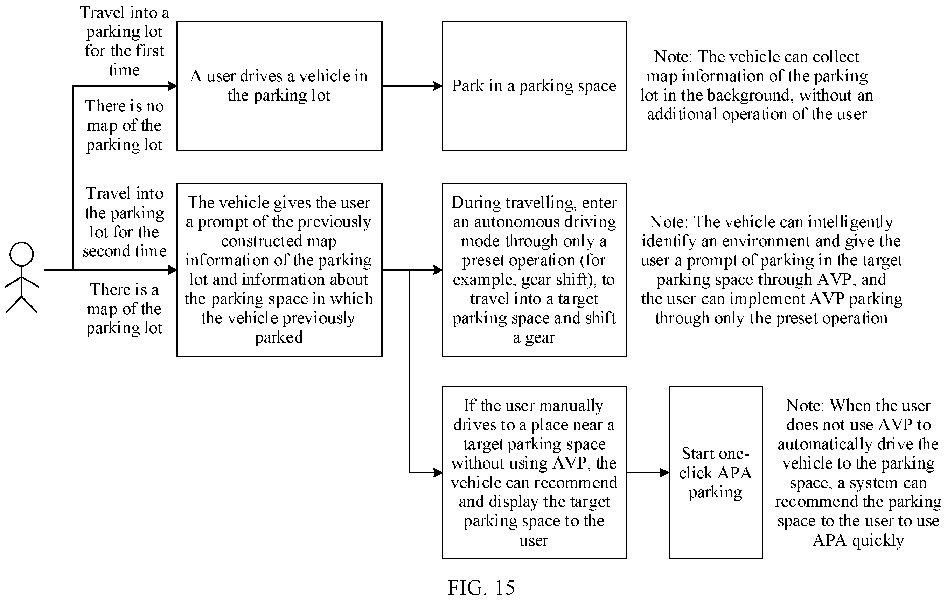

FIG. 15 is a schematic flowchart of auto parking according to an embodiment of this application. As shown in FIG. 15, when a user drives a vehicle out of an external road and into a parking lot, map information of the parking lot is not stored in the vehicle. The user drives the vehicle in the parking lot and enables the vehicle to park in a parking space. In this process, the user does not perform an additional operation. A composition module of the vehicle may construct the map information of the parking lot in the background, and the composition process in the background is imperceptible to the user.

When the user drives the vehicle into a parking lot again, the vehicle may give the user a prompt of map information of the parking lot and information about a parking space in which the vehicle parked previously. The user may perform one-click AVP through a preset operation (for example, gear shift). When the vehicle detects the preset operation of the user, the vehicle may automatically travel to a parking space specified by the user and park in the parking space. Alternatively, if the user does not start an AVP mode but manually drives the vehicle to a place near a parking space, the vehicle may recommend a target parking space to the user, and give the user a prompt of performing one-click APA through the preset operation.

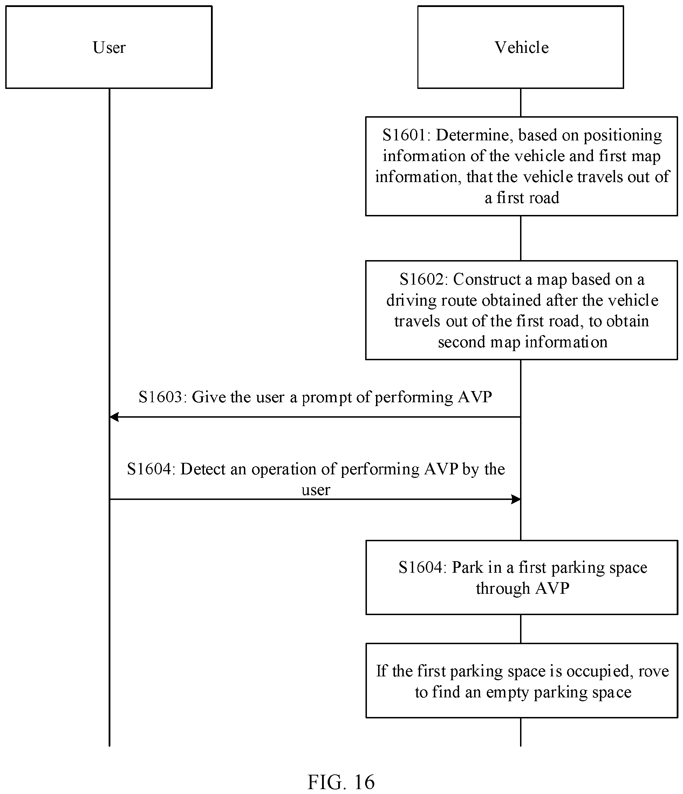

FIG. 16 is a schematic flowchart of a method 1600 for performing AVP on a vehicle according to an embodiment of this application. As shown in FIG. 16, the method 1600 includes the following steps.

S1601: A vehicle determines, based on positioning information of the vehicle and first map information, that the vehicle leaves a first road.

In an embodiment, the first map information may be map information stored in the vehicle, or may be map information obtained by the vehicle from another device (for example, a server).

It should be understood that, for a process in which the vehicle determines, based on the first map information and the positioning information of the vehicle, that the vehicle leaves the first road, refer to descriptions in the foregoing embodiments. Details are not described herein again.

S1602: The vehicle constructs a map based on a driving route obtained after the vehicle leaves the first road, to obtain second map information, where the second map information includes information about one or more parking spaces.

It should be understood that, for a process of constructing second map information of an internal road when the vehicle leaves an external road and into the internal road, refer to descriptions in the foregoing embodiments. Details are not described herein again.

S1603: Give, in response to detecting that the vehicle leaves the first road again, the user a prompt of performing AVP.

In an embodiment, in response to detecting that the vehicle leaves the first road again, the user is given a prompt of with the second map information and information about a recommended parking space.

In an embodiment, the recommended parking space may be a parking space in which the vehicle parks when the vehicle travels on the internal road in S1602.

S1604: In response to a detected operation of selecting a first parking space by the user to perform AVP, park the vehicle into the first parking space based on the second map information and AVP, where the one or more parking spaces include the first parking space.

In an embodiment, if it is determined, in a process in which the vehicle parks in the first parking space, that the first parking space is occupied, the vehicle may continue to perform roving to find an empty parking space, and park in the empty parking space.

In an embodiment, after parking in the empty parking space, the vehicle may further send information to a mobile device (for example, a mobile phone or a wearable device) of the user. The information indicates information about a parking location of the vehicle.

In an embodiment, the vehicle may perform roving within a preset distance to find the empty parking space. If the vehicle does not find the empty parking space within the preset distance, the vehicle may stop travelling and send information to a mobile device (for example, a mobile phone or a wearable device) of the user. The information indicates that the vehicle does not park in a parking space.

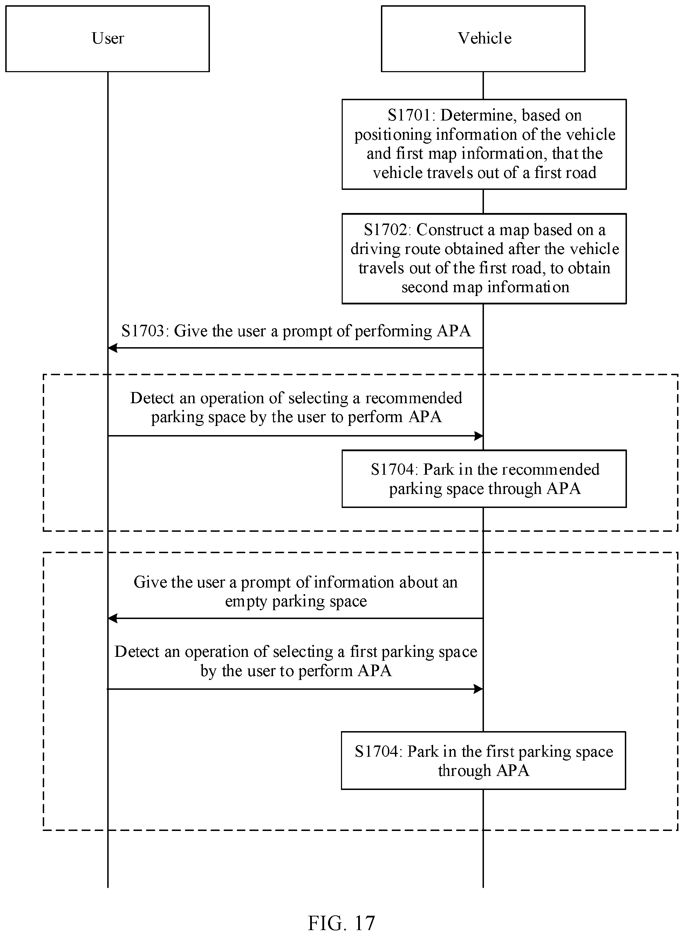

FIG. 17 is a schematic flowchart of a method 1700 for performing APA on a vehicle according to an embodiment of this application. The method 1700 includes the following steps.

S1701: A vehicle determines, based on positioning information of the vehicle and first map information, that the vehicle leaves a first road.

S1702: The vehicle constructs a map based on a driving route obtained after the vehicle leaves the first road, to obtain second map information, where the second map information includes information about one or more parking spaces.

S1703: Give, in response to detecting that the vehicle leaves the first road again, the user a prompt of performing APA.

It should be understood that, for S1701 to S1703, refer to the process of S1601 to S1603.

S1704: In response to a detected operation of selecting a first parking space by the user to perform APA, park the vehicle into the first parking space based on the second map information and APA, where the one or more parking spaces include the first parking space.

In an embodiment, the first parking space may be a parking space in which the vehicle parks when the vehicle travels along the driving route after travelling out of the first road in S1702.

In an embodiment, the first parking space may be a parking space near a current location of the vehicle. When detecting an operation of selecting the first parking space by the user, the vehicle may park in the first parking space through APA.

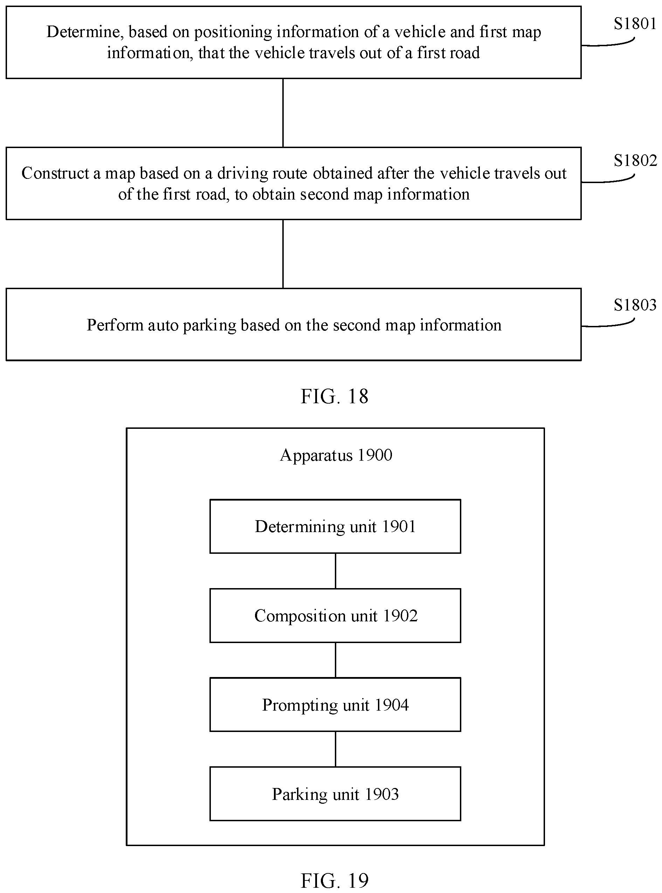

FIG. 18 is a schematic flowchart of an auto parking method 1800 according to an embodiment of this application. The method 1800 may be applied to a vehicle, and the method 1800 includes the following steps.

S1801: A vehicle determines, based on positioning information of the vehicle and first map information, that the vehicle leaves a first road.

For example, as shown in FIG. 3(a), the vehicle may determine, based on the positioning information of the vehicle and the first map information locally stored in the vehicle or obtained from the server, that the vehicle leaves the first road.

Optionally, the first road is an external road.

Optionally, the vehicle may alternatively determine, based on image information identified by the vehicle, that the vehicle leaves the first road. For example, as shown in FIG. 5, when the vehicle recognizes "an underground parking lot of an XX shopping mall" based on image information collected by a camera, the vehicle determines that the vehicle is about to travel into the underground parking lot.

S1802: The vehicle constructs a map based on a driving route obtained after the vehicle leaves the first road, to obtain second map information.

For example, as shown in FIG. 3(b), when the vehicle leaves the external road and travels into an internal parking lot, the vehicle travels along the routes ① to ⑦. In this process, the vehicle constructs the second map information based on data collected by the sensor (for example, a camera, an ultrasonic radar, a millimeter-wave radar, or a lidar). Optionally, before the vehicle constructs a map based on the driving route obtained after the vehicle leaves the first road, to obtain the second map information, the method further includes: The vehicle determines that a frequency at which the vehicle leaves the first road within preset duration is greater than or equal to a first frequency threshold.

For example, the preset duration is one month, and the first frequency threshold is three times. In this case, when the vehicle travels into an internal road (for example, an internal parking lot or an underground parking lot) two times before, the vehicle may not automatically construct a map. Instead, when the vehicle travels into the internal road for the third time, the vehicle is triggered to automatically construct second map information of the internal road.

Optionally, the vehicle stores information about the first area. Before the vehicle constructs a map based on the driving route obtained after the vehicle leaves the first road, to obtain the second map information, the method further includes: The vehicle determines that the vehicle is located in the first area.

For example, user information stored in the vehicle includes address information (for example, a city A) of the user. When the vehicle determines, based on the first map information, that the vehicle leaves an external road in the city A for the first time, the vehicle may be triggered to construct a map. When the user drives the vehicle from the city A into a city B, if the vehicle determines, based on the first map information, that the vehicle leaves an external road in the city B, the vehicle may not be triggered to construct a map.

Optionally, before the vehicle constructs a map based on the driving route obtained after the vehicle leaves the first road, to obtain the second map information, the method further includes: The vehicle requests, from the server, map information obtained after the vehicle leaves the first road. The vehicle receives indication information sent by the server. The indication information indicates that the server does not store the map information obtained after the vehicle leaves the first road.

S1803: The vehicle performs auto parking based on the second map information.

Optionally, the second map information includes information about one or more parking spaces. Before the vehicle performs auto parking based on the second map information, the method further includes: The vehicle gives, in response to detecting that the vehicle leaves the first road again, the user a prompt of performing auto parking. That the vehicle performs auto parking based on the second map information includes: The vehicle parks, in response to a detected first operation that the user indicates to perform auto parking, the vehicle in a first parking space based on the second map information. The one or more parking spaces include the first parking space.

For example, as shown in FIG. 6(a), when the vehicle leaves the first road again and is currently located near the recommended parking space, the vehicle may give the user a prompt of performing one-click APA. When the vehicle detects the operation of tapping the control 601 by the user, the vehicle may perform APA.

Optionally, when the vehicle leaves the first road again and the vehicle is currently located near the recommended parking space, the vehicle may also give, by using a voice, the user a prompt indicating whether to perform APA. After the vehicle receives a voice instruction of the user indicating to perform APA, the vehicle may perform APA.

Optionally, the method further includes: The vehicle gives, in response to detecting that the vehicle leaves the first road again, the user a prompt of the second map information.

For example, as shown in FIG. 6(a), the vehicle may give, on the HMI, a prompt of map information of the parking lot.

Optionally, the first parking space is a parking space in which the vehicle parks when the vehicle travels along the driving route. That the vehicle gives the user a prompt of the second map information includes: The vehicle gives the user a prompt of the second map information and information about the first parking space.

For example, as shown in FIG. 6(a), the vehicle may give, on the HMI, the user a prompt of information about the recommended parking space.

Optionally, that the vehicle parks, in response to the detected first operation that the user indicates to perform auto parking, the vehicle in the first parking space based on the second map information includes: The vehicle parks, in response to a detected second operation of selecting the first parking space from the one or more parking spaces by the user and the detected first operation, the vehicle in the first parking space based on the second map information.

For example, as shown in FIG. 6(a), the user may alternatively choose not to enable the vehicle to park in the recommended parking space, but select another parking space (for example, a parking space on the left side of the recommended parking space) as the first parking space. When the vehicle detects an operation of selecting the first parking space by the user and detects the first operation of the user, the vehicle may park the vehicle in the first parking space through APA.

Optionally, that the vehicle gives, in response to detecting that the vehicle leaves the first road again, the user a prompt of performing auto parking includes: The vehicle gives, in response to detecting that the vehicle leaves the first road again and the vehicle recognizes a first identifier, the user a prompt of performing auto valet parking AVP. The first identifier is an identifier recognized when the vehicle travels along the driving route. That the vehicle parks, in response to the detected first operation that the user indicates to perform auto parking, the vehicle in the first parking space based on the second map information includes: The vehicle parks, in response to a detected operation that the user indicates to perform AVP, the vehicle in the first parking space based on the second map information.

For example, as shown in FIG. 8, when the vehicle leaves the first road again and identifies an identifier (for example, a barrier bar) of the parking lot, the vehicle may give, on the HMI, the user a prompt that "It is detected that you traveled into the internal road last time. There is a recommended parking space for you. Do you want to perform one-click AVP?" When the vehicle detects the operation of tapping the control 801 by the user, the vehicle may park the vehicle in the recommended parking space through AVP.

Optionally, that the vehicle gives, in response to detecting that the vehicle leaves the first road again, the user a prompt of performing auto parking includes: The vehicle gives, in response to detecting that the vehicle leaves the first road again and the vehicle determines that a distance between a current location of the vehicle and a start point of the driving route is less than or equal to a preset distance, the user a prompt of performing auto valet parking AVP. That the vehicle parks, in response to the detected first operation that the user indicates to perform auto parking, the vehicle in the first parking space based on the second map information includes: The vehicle parks, in response to a detected operation that the user indicates to perform AVP, the vehicle in the first parking space based on the second map information.

For example, the driving route of the vehicle may be the routes ① to ⑦ shown in FIG. 3(b). When the vehicle leaves the first road again and a distance between the vehicle and the start point of the driving route is less than or equal to the preset distance, the vehicle may give the user a prompt of performing AVP. When the vehicle detects a preset operation (for example, gear shift) of the user, the vehicle may park the vehicle in the recommended parking space through AVP.

Optionally, that the vehicle gives, in response to detecting that the vehicle leaves the first road again, the user a prompt of performing auto parking includes: The vehicle gives, in response to detecting that the vehicle leaves the first road again and a distance between the vehicle and the first parking space is less than or equal to a preset distance, the user a prompt of performing auto parking assist APA. That the vehicle parks, in response to the detected first operation that the user indicates to perform auto parking, the vehicle in the first parking space based on the second map information includes: The vehicle parks, in response to a detected operation that the user indicates to perform APA, the vehicle in the first parking space based on the second map information.

For example, as shown in FIG. 6(a), when the vehicle leaves the first road again and is currently located near the recommended parking space, the vehicle may give the user a prompt of performing one-click APA. When the vehicle detects the operation of tapping the control 601 by the user, the vehicle may perform APA.

Optionally, that the vehicle gives, in response to detecting that the vehicle leaves the first road again, the user a prompt of performing auto parking includes: The vehicle gives, in response to detecting that the vehicle leaves the first road again, the user a prompt of selecting a path from a plurality of paths to perform auto parking. Each path in the plurality of paths is a path from a current location of the vehicle to the first parking space. That the vehicle parks, in response to the detected first operation that the user indicates to perform auto parking, the vehicle in the first parking space based on the second map information includes: parking, in response to a detected third operation of selecting a first path from the plurality of paths by the user and the detected first operation, the vehicle in the first parking space based on the second map information and the first path.

For example, as shown in FIG. 10(b), when the vehicle detects that the user wants to enable the vehicle to park in the recommended parking space 1, the vehicle may plan two paths (a path 1 and a path 2) from the current location to the recommended parking space 1. When the vehicle detects an operation of selecting the path 1 by the user, the vehicle may park the vehicle in the recommended parking space 1 based on the map information of the parking lot and information about the path 1.

Optionally, the first operation includes a gear shift operation.

For example, a steering wheel of the vehicle includes a left shift gear and a right shift gear. The gear shift operation may be an operation of moving the left shift gear by the user in a first preset direction, or the gear shift operation may be an operation of moving the right shift gear by the user in a preset direction.

FIG. 19 is a schematic block diagram of an auto parking apparatus 1900 according to an embodiment of this application. The apparatus 1900 includes a determining unit 1901, configured to determine, based on positioning information of the apparatus and first map information, that the apparatus leaves a first road, a composition unit 1902, configured to construct a map based on a driving route obtained after the apparatus leaves the first road, to obtain second map information; and a parking unit 1903, configured to perform auto parking based on the second map information.

Optionally, the second map information includes information about one or more parking spaces. The apparatus 1900 further includes a prompting unit 1904, configured to: before auto parking is performed based on the second map information, give, in response to detecting that the apparatus leaves the first road again, a user a prompt of performing auto parking. The parking unit 1903 is specifically configured to park, in response to a detected first operation that the user indicates to perform auto parking, the apparatus in a first parking space based on the second map information. The one or more parking spaces include the first parking space.

Optionally, the prompting unit 1904 is further configured to give the user a prompt of the second map information in response to detecting that the apparatus leaves the first road again.

Optionally, the first parking space is a parking space in which the apparatus parks when the apparatus travels along the driving route. The prompting unit 1904 is specifically configured to give the user a prompt of the second map information and information about the first parking space.

Optionally, the parking unit 1903 is specifically configured to park, in response to a detected second operation of selecting the first parking space from the one or more parking spaces by the user and the detected first operation, the apparatus in the first parking space based on the second map information.

Optionally, the prompting unit 1904 is specifically configured to give, in response to detecting that the apparatus leaves the first road again and the apparatus recognizes a first identifier, the user a prompt of performing auto valet parking AVP. The first identifier is an identifier recognized when the apparatus travels along the driving route. The parking unit 1903 is specifically configured to park, in response to a detected operation that the user indicates to perform AVP, the apparatus in the first parking space based on the second map information.

Optionally, the prompting unit 1904 is specifically configured to give, in response to detecting that the apparatus leaves the first road again and a distance between the apparatus and the first parking space is less than or equal to a preset distance, the user a prompt of performing auto parking assist APA. The parking unit 1903 is specifically configured to park, in response to a detected operation that the user indicates to perform APA, the apparatus in the first parking space based on the second map information.

Optionally, the prompting unit 1904 is specifically configured to give, in response to detecting that the apparatus leaves the first road again, the user a prompt of selecting a path from a plurality of paths to perform auto parking. Each path in the plurality of paths is a path from a current location of the apparatus to the first parking space. The parking unit 1903 is specifically configured to park, in response to a detected third operation of selecting a first path from the plurality of paths by the user and the detected first operation, the apparatus in the first parking space based on the second map information and the first path.

Optionally, the first operation includes a gear shift operation.

Optionally, the determining unit 1901 is further configured to: before the map is constructed based on the driving route obtained after the apparatus leaves the first road, to obtain the second map information, determine that a frequency at which the apparatus leaves the first road within preset duration is greater than or equal to a first frequency threshold.

Optionally, the apparatus stores information about a first area. The determining unit 1901 is further configured to: before the map is constructed based on the driving route obtained after the apparatus leaves the first road, to obtain the second map information, determine that the apparatus is located in the first area.

Optionally, the apparatus further includes: a sending unit, configured to: before the map is constructed based on the driving route obtained after the apparatus leaves the first road, to obtain the second map information, request, from a server, map information obtained after the apparatus leaves the first road; and a receiving unit, configured to receive indication information sent by the server. The indication information indicates that the server does not store the map information obtained after the apparatus leaves the first road.

Optionally, the apparatus 1900 may be located in the foregoing vehicle.

Optionally, the apparatus 1900 may be a computing platform in the vehicle.

An embodiment of this application further provides an apparatus. The apparatus includes a processing unit and a storage unit. The storage unit is configured to store an instruction. The processing unit executes the instruction stored in the storage unit, so that the apparatus performs the steps performed by the server in the foregoing embodiment. Alternatively, the processing unit executes the instruction stored in the storage unit, so that the apparatus performs the steps performed by the vehicle in the foregoing embodiment.

Optionally, if the apparatus is located in the vehicle, the processing unit may be the processor 151 shown in FIG. 1, and the storage unit may be the memory 152 shown in FIG. 1. The memory 152 may be a storage unit (for example, a register or a cache) in a chip, or a storage unit (for example, a read-only memory or a random access memory) located outside the chip in the vehicle.

An embodiment of this application further provides a computer program product. The computer program product includes computer program code. When the computer program code is run on a computer, the computer is enabled to perform the foregoing method.

An embodiment of this application further provides a vehicle. The vehicle may include the apparatus 1900.

An embodiment of this application further provides a computer-readable medium. The computer-readable medium stores program code. When the computer program code is run on a computer, the computer is enabled to perform the foregoing method.

In an implementation process, steps in the foregoing method can be completed by using a hardware integrated logical circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing method in combination with hardware of the processor. To avoid repetition, details are not described herein again.

It should be understood that, in this embodiment of this application, the memory may include a read-only memory and a random access memory, and provide an instruction and data to the processor.

In embodiments of this application, "first", "second", and various numeric numbers are merely used for distinguishing for ease of description and are not intended to limit the scope of embodiments of this application. For example, "first", "second", and various numeric numbers are used for distinguishing between different pipes, through holes, and the like.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented based on some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An auto parking method, wherein the method is applied to a vehicle, and the method comprises:
determining, based on positioning information of the vehicle and first map information, that the vehicle leaves a first road;
constructing a map based on a driving route obtained after the vehicle leaves the first road, to obtain second map information; and
performing auto parking based on the second map information.

2. The method according to claim 1, wherein the second map information comprises information about one or more parking spaces, and before the performing auto parking based on the second map information, the method further comprises:
giving, in response to detecting that the vehicle leaves the first road again, a user a prompt of performing auto parking; and
the performing auto parking based on the second map information comprises:
parking, in response to a detected first operation that the user indicates to perform auto parking, the vehicle in a first parking space based on the second map information, wherein the one or more parking spaces comprise the first parking space.

3. The method according to claim 2, wherein the method further comprises:
giving the user a prompt of the second map information in response to detecting that the vehicle leaves the first road again.

4. The method according to claim 3, wherein the first parking space is a parking space in which the vehicle parks when the vehicle travels along the driving route, and the giving the user a prompt of the second map information comprises:
giving the user a prompt of the second map information and information about the first parking space.

5. The method according to any one of claims 2 to 4, wherein the parking, in response to a detected first operation that the user indicates to perform auto parking, the vehicle in a first parking space based on the second map information comprises:
parking, in response to a detected second operation of selecting the first parking space from the one or more parking spaces by the user and the detected first operation, the vehicle in the first parking space based on the second map information.

6. The method according to any one of claims 2 to 5, wherein the giving, in response to detecting that the vehicle leaves the first road again, a user a prompt of performing auto parking comprises:
giving, in response to detecting that the vehicle leaves the first road again and the vehicle recognizes a first identifier, the user a prompt of performing auto valet parking AVP, wherein the first identifier is an identifier recognized when the vehicle travels along the driving route; and
the parking, in response to a detected first operation that the user indicates to perform auto parking, the vehicle in a first parking space based on the second map information comprises:
parking, in response to a detected operation that the user indicates to perform AVP, the vehicle in the first parking space based on the second map information.

7. The method according to any one of claims 2 to 5, wherein the giving, in response to detecting that the vehicle leaves the first road again, a user a prompt of performing auto parking comprises:
giving, in response to detecting that the vehicle leaves the first road again and a distance between the vehicle and the first parking space is less than or equal to a preset distance, the user a prompt of performing auto parking assist APA; and
the parking, in response to a detected first operation that the user indicates to perform auto parking, the vehicle in a first parking space based on the second map information comprises:
parking, in response to a detected operation that the user indicates to perform APA, the vehicle in the first parking space based on the second map information.

8. The method according to any one of claims 2 to 7, wherein the giving, in response to detecting that the vehicle leaves the first road again, a user a prompt of performing auto parking comprises:
giving, in response to detecting that the vehicle leaves the first road again, the user a prompt of selecting a path from a plurality of paths to perform auto parking, wherein each path in the plurality of paths is a path from a current location of the vehicle to the first parking space; and
the parking, in response to a detected first operation that the user indicates to perform auto parking, the vehicle in a first parking space based on the second map information comprises:
parking, in response to a detected third operation of selecting a first path from the plurality of paths by the user and the detected first operation, the vehicle in the first parking space based on the second map information and the first path.

9. The method according to any one of claims 2 to 8, wherein the first operation comprises a gear shift operation.

10. The method according to any one of claims 1 to 9, wherein before the constructing a map based on a driving route obtained after the vehicle leaves the first road, to obtain second map information, the method further comprises:
determining that a frequency at which the vehicle leaves the first road within preset duration is greater than or equal to a first frequency threshold.

11. The method according to any one of claims 1 to 10, wherein the vehicle stores information about a first area, and before the constructing a map based on a driving route obtained after the vehicle leaves the first road, to obtain second map information, the method further comprises:
determining that the vehicle is located in the first area.

12. The method according to any one of claims 1 to 11, wherein before the constructing a map based on a driving route obtained after the vehicle leaves the first road, to obtain second map information, the method further comprises:
requesting, from a server, map information obtained after the vehicle leaves the first road; and
receiving indication information sent by the server, wherein the indication information indicates that the server does not store the map information obtained after the vehicle leaves the first road.

13. An auto parking apparatus, comprising
a determining unit, configured to determine, based on positioning information of the apparatus and first map information, that the apparatus leaves a first road;
a composition unit, configured to construct a map based on a driving route obtained after the apparatus leaves the first road, to obtain second map information; and
a parking unit, configured to perform auto parking based on the second map information.

14. The apparatus according to claim 13, wherein the second map information comprises information about one or more parking spaces, and the apparatus further comprises:
a prompting unit, configured to: before auto parking is performed based on the second map information, give, in response to detecting that the apparatus leaves the first road again, a user a prompt of performing auto parking, wherein
the parking unit is specifically configured to park, in response to a detected first operation that the user indicates to perform auto parking, the apparatus in a first parking space based on the second map information, wherein the one or more parking spaces comprise the first parking space.

15. The apparatus according to claim 14, wherein the prompting unit is further configured to give the user a prompt of the second map information in response to detecting that the apparatus leaves the first road again.

16. The apparatus according to claim 15, wherein the first parking space is a parking space in which the apparatus parks when the apparatus travels along the driving route, and the prompting unit is specifically configured to give the user a prompt of the second map information and information about the first parking space.

17. The apparatus according to any one of claims 14 to 16, wherein the parking unit is specifically configured to park, in response to a detected second operation of selecting the first parking space from the one or more parking spaces by the user and the detected first operation, the apparatus in the first parking space based on the second map information.

18. The apparatus according to any one of claims 14 to 17, wherein
the prompting unit is specifically configured to give, in response to detecting that the apparatus leaves the first road again and the apparatus recognizes a first identifier, the user a prompt of performing auto valet parking AVP, wherein the first identifier is an identifier recognized when the apparatus travels along the driving route; and
the parking unit is specifically configured to park, in response to a detected operation that the user indicates to perform AVP, the apparatus in the first parking space based on the second map information.

19. The apparatus according to any one of claims 14 to 17, wherein
the prompting unit is specifically configured to give, in response to detecting that the apparatus leaves the first road again and a distance between the apparatus and the first parking space is less than or equal to a preset distance, the user a prompt of performing auto parking assist APA; and
the parking unit is specifically configured to park, in response to a detected operation that the user indicates to perform APA, the apparatus in the first parking space based on the second map information.

20. The apparatus according to any one of claims 14 to 19, wherein
the prompting unit is specifically configured to give, in response to detecting that the apparatus leaves the first road again, the user a prompt of selecting a path from a plurality of paths to perform auto parking, wherein each path in the plurality of paths is a path from a current location of the apparatus to the first parking space; and
the parking unit is specifically configured to park, in response to a detected third operation of selecting a first path from the plurality of paths by the user and the detected first operation, the apparatus in the first parking space based on the second map information and the first path.

21. The apparatus according to any one of claims 14 to 20, wherein the first operation comprises a gear shift operation.

22. The apparatus according to any one of claims 13 to 21, wherein the determining unit is further configured to: before the map is constructed based on the driving route obtained after the apparatus leaves the first road, to obtain the second map information, determine that a frequency at which the apparatus leaves the first road within preset duration is greater than or equal to a first frequency threshold.

23. The apparatus according to any one of claims 13 to 22, wherein the apparatus stores information about a first area; and
the determining unit is further configured to: before the map is constructed based on the driving route obtained after the apparatus leaves the first road, to obtain the second map information, determine that the apparatus is located in the first area.

24. The apparatus according to any one of claims 13 to 23, wherein the apparatus further comprises:
a sending unit, configured to: before the map is constructed based on the driving route obtained after the apparatus leaves the first road, to obtain the second map information, request, from a server, map information obtained after the apparatus leaves the first road; and
a receiving unit, configured to receive indication information sent by the server, wherein the indication information indicates that the server does not store the map information obtained after the apparatus leaves the first road.

25. An auto parking apparatus, comprising a processor and a memory, wherein the memory is configured to store program instructions, and the processor is configured to invoke the program instructions to perform the method according to any one of claims 1 to 12.

26. A vehicle, comprising the apparatus according to any one of claims 13 to 25.

27. A computer-readable storage medium, wherein the computer-readable storage medium stores program instructions, and when the program instructions are run by a processor, the method according to any one of claims 1 to 12 is implemented.

28. A chip, wherein the chip comprises a processor and a data interface, and the processor reads, through the data interface, instructions stored in a memory, to perform the method according to any one of claims 1 to 12.
